(19)

Europäisches Patentamt

European Patent Office

Office européen des brevets

(11) **EP 4 575 986 A1**

(12) **EUROPEAN PATENT APPLICATION**
published in accordance with Art. 153(4) EPC

(43) Date of publication:
**25.06.2025 Bulletin 2025/26**

(21) Application number: **23856483.5**

(22) Date of filing: **10.08.2023**

(51) International Patent Classification (IPC):
*G06T 7/00* (2017.01)

(52) Cooperative Patent Classification (CPC):
**G06T 7/00; G06V 10/141;** Y02E 60/10; Y02P 70/50

(86) International application number:
**PCT/CN2023/112228**

(87) International publication number:
**WO 2024/041393 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.08.2022 CN 202211037772**

(71) Applicant: **Contemporary Amperex Technology Co., Limited**
**Ningde, Fujian 352100 (CN)**

(72) Inventors:
• **TU, Yinhang**
**Ningde, Fujian 352100 (CN)**
• **GAO, Yifei**
**Ningde, Fujian 352100 (CN)**
• **LIU, Yi**
**Ningde, Fujian 352100 (CN)**

(74) Representative: **Gong, Jinping**
**CocreateIP**
**Neumarkter Straße 21**
**81673 München (DE)**

(54) **DEFECT DETECTION METHOD, SYSTEM AND APPARATUS, DEVICE, STORAGE MEDIUM AND PRODUCT**

(57)    This application relates to a defect inspection method, system and apparatus, a device, a storage medium, and a product. In response to an inspection instruction for a target material, a camera device is controlled to acquire a two-dimensional image and a three-dimensional image of the target material, and a defect inspection result of the target material is determined based on the two-dimensional image and the three-dimensional image of the target material. In this method, because the camera device is a structured light camera device integrating a two-dimensional image acquisition function and a three-dimensional image acquisition function, the two-dimensional image and the three-dimensional image can be acquired without the need of switching camera devices, improving the convenience of defect inspection of the target material. Moreover, the use of the same camera device to acquire the two-dimensional image and the three-dimensional image ensures that the two-dimensional image and the three-dimensional image are in the same coordinate system, improving the efficiency of defect inspection of the target material. In addition, the use of the two-dimensional image and the three-dimensional image in two different dimensions for defect inspection of the target material improves the accuracy of the defect inspection.

EP 4 575 986 A1

In response to an inspection instruction for a target material, control a camera device to acquire a two-dimensional image and a three-dimensional image of the target material; the camera device being a structured light camera device integrating a two-dimensional image acquisition function and a three-dimensional image acquisition function — S901

Determine a defect inspection result of the target material based on the two-dimensional image and the three-dimensional image of the target material — S902

FIG. 9

Description

## CROSS-REFERENCE TO RELATED APPLICATIONS

This application refers to Chinese Patent Application No. 202211037772.3, filed on August 26, 2022 and entitled "DEFECT INSPECTION METHOD, SYSTEM, AND APPARATUS, DEVICE, STORAGE MEDIUM, AND PRODUCT," which is incorporated herein by reference in its entirety.

## TECHNICAL FIELD

This application relates to the field of welding inspection technologies, and in particular, to a defect inspection method, system, and apparatus, a device, a storage medium, and a product.

## BACKGROUND

In production and technology enterprises, strict quality inspection must be performed on products to ensure product quality, for example, inspection of a product surface defect.

Taking the assembly and manufacturing process of lithium batteries as an example, for a battery after second electrolyte injection, to ensure the sealing of the battery after electrolyte injection, the sealing of the battery needs to be guaranteed in a manner of welding of sealing nails following pressing of glue nails. Then, considering that welding processes are influenced by many objective factors in actual applications, there are many post-weld defects that exist after welding.

Therefore, there is an urgent need for a method that can inspect defects in a convenient, efficient, and accurate manner after sealing nails welding.

## SUMMARY

In view of this, it is necessary to provide a defect inspection method, system, and apparatus, a device, a storage medium, and a product for the foregoing technical problems, to inspect defects in a convenient, efficient, and accurate manner after sealing nails welding.

According to a first aspect, this application provides a defect inspection method, where the method includes:

> in response to an inspection instruction for a target material, controlling a camera device to acquire a two-dimensional image and a three-dimensional image of the target material; the camera device being a structured light camera device integrating a two-dimensional image acquisition function and a three-dimensional image acquisition function; and determining a defect inspection result of the target material based on the two-dimensional image and the three-dimensional image of the target material.

In an embodiment of this application, in response to an inspection instruction for a target material, a camera device is controlled to acquire a two-dimensional image and a three-dimensional image of the target material, and a defect inspection result of the target material is determined based on the two-dimensional image and the three-dimensional image of the target material. In this method, because the camera device is a structured light camera device integrating a two-dimensional image acquisition function and a three-dimensional image acquisition function, in the process of acquiring the two-dimensional image and the three-dimensional image, the two-dimensional image and the three-dimensional image can be acquired without the need of switching camera devices, ensuring the convenience of image acquisition and thereby improving the convenience of defect inspection of the target material. Moreover, the use of the same camera device to acquire the two-dimensional image and the three-dimensional image ensures that the two-dimensional image and the three-dimensional image that are acquired are in the same coordinate system. Therefore, in defect inspection using the two-dimensional image and the three-dimensional image, preprocessing on the two images needs not too many complicated data unification operations, thereby improving the efficiency of defect inspection of the target material. In addition, the two-dimensional image and the three-dimensional image of the target material in two different dimensions are used for defect inspection of the target material, and such multi-dimensional information basis ensures the comprehensiveness of defect inspection of the target material, avoids the problem of erroneous determination due to single image inspection with the two-dimensional image or the three-dimensional image, and improves the accuracy of the defect inspection.

In one of the embodiments, the target material includes a plurality of products under inspection, and each of the products under inspection is at a different inspection workstation; and the controlling a camera device to acquire a two-dimensional image and a three-dimensional image of the target material includes:

> controlling the camera device to acquire a two-dimensional image and a three-dimensional image of a product under inspection at a current inspection workstation; and
> controlling the camera device to move to a next inspection workstation to acquire a two-dimensional image and a three-dimensional image of a product under inspection at the next inspection workstation after the acquisition of the two-dimensional image and the three-dimensional image of the product under inspection at the current inspection workstation is completed, to acquire two-dimensional images and three-dimensional images of all products under inspection.

In this embodiment of this application, the camera device is controlled to acquire a two-dimensional image and a three-dimensional image of a product under inspection at a current inspection workstation. After the acquisition of the two-dimensional image and the three-dimensional image of the product under inspection at the current inspection workstation is completed, the camera device is controlled to move to a next inspection workstation to acquire a two-dimensional image and a three-dimensional image of a product under inspection at the next inspection workstation, to acquire two-dimensional images and three-dimensional images of all products under inspection. In this method, the acquisition of images of a plurality of products under inspection can be implemented by moving the camera device, ensuring the convenience of defect inspection of the target material. Furthermore, in image acquisition after the movement of the camera device, each product under inspection is within a view of field of the camera device, which also improve the accuracy of the defect inspection of the target material.

In one of the embodiments, the controlling the camera device to acquire a two-dimensional image and a three-dimensional image of a product under inspection at a current inspection workstation includes:

controlling the camera device to acquire a two-dimensional image of the product under inspection at the current inspection workstation under the condition that a two-dimensional light supplementation device is turned on, and send a movement instruction to an upper-level computer after the acquisition of the two-dimensional image is completed, the movement instruction being used to instruct the upper-level computer to move the two-dimensional light supplementation device to the next inspection workstation; and
controlling the camera device to acquire a three-dimensional image of a product under inspection at the current inspection workstation under the condition that a three-dimensional light supplementation device is turned on.

In this embodiment of this application, the camera device is controlled to acquire the two-dimensional image of the product under inspection at the current inspection workstation under the condition that the two-dimensional light supplementation device is turned on, and send the movement instruction to the upper-level computer after the acquisition of the two-dimensional image is completed, to instruct the upper-level computer to move the two-dimensional light supplementation device to the next inspection workstation; and the camera device is controlled to acquire the three-dimensional image of the product under inspection at the current inspection workstation under the condition that the three-dimensional light supplementation device is turned on. In this method, the two-dimensional light supplementation device is used to supplement light when acquiring the two-dimensional image, and the three-dimensional light supplementation device is used to supplement light when acquiring the three-dimensional image, ensuring that the lighting conditions are optimal when acquiring the two-dimensional images and the three-dimensional images, thereby improving the clarity and information comprehensiveness of the two-dimensional image and the three-dimensional image of the product under inspection that are acquired, achieving the effect of high-precision full-edge imaging of the product under inspection, and ensuring the accuracy of subsequent defect inspection.

In one of the embodiments, the inspection instruction for the target material is sent by the upper-level computer after detecting that the target material has entered the inspection workstation and controlling a press-fitting apparatus to perform a downward pressing operation on the target material; where a coverage area of the press-fitting apparatus is greater than or equal to a top surface area of the target material. The press-fitting apparatus is used to downwardly press the target material. For the target material, especially a material including a plurality of products under inspection, the height of all products under inspection in the target material can be unified to ensure that all products under inspection are at the same level, avoiding loss of pixels in the image due to camera depth of field.

In one of the embodiments, the camera device is a 3D structured light camera. The 3D structured light camera has higher camera precision, and has a larger projection dimension with its use of phase-shifting structured light technology, ensuring that the camera can capture more material information, greatly improving imaging speed and image quality. Moreover, the 3D structured light camera is compatible with a variety of welding process products using 3D structured light, ensuring compatibility in defect inspection of different materials.

In one of the embodiments, the determining a defect inspection result of the target material based on the two-dimensional image and the three-dimensional image of the target material includes:

performing spatial alignment processing on the two-dimensional image and the three-dimensional image; and
processing the two-dimensional image and the three-dimensional image that are spatially aligned through a preset deep learning algorithm to obtain a defect inspection result of the target material.

In this embodiment of this application, spatial alignment processing is performed on the two-dimensional image and the three-dimensional image, and then the two-dimensional image and the three-dimensional image that are spatially aligned are processed through a preset deep learning algorithm to obtain a defect inspection result of the target material. In this method, the two-dimensional image and the three-dimensional image are spatially aligned firstly, improving the simplicity and convenience of subsequent defect inspection on the two-dimensional image and the three-dimensional image that are spatially aligned and reducing the computational complexity. Moreover, because the two-dimensional image and the three-dimensional image are acquired using the same camera device, and the spatial alignment processing on them needs not too many complicated algorithms, so that the time required for spatial alignment processing on the two-dimensional image and the three-dimensional image can be reduced, and the efficiency of the spatial processing can be improved, thereby improving the efficiency of the whole defect inspection process.

In one of the embodiments, the defect inspection result includes an inspection result of a first defect and an inspection result of a second defect, the first defect being a defect without height information and the second defect being a defect with height information.

The processing the two-dimensional image and the three-dimensional image that are spatially aligned through a preset deep learning algorithm to obtain a defect inspection result of the target material includes:

obtaining a first inspection region in the two-dimensional image and a second inspection region in the three-dimensional image; and
checking the inspection result of the first defect based on the first inspection region and checking the inspection result of the second defect based on the second inspection region.

In this embodiment of this application, by obtaining the inspection regions in the two-dimensional image and the three-dimensional image, the key inspection regions in the image are extracted, avoiding a large amount of background redundant information and improving the accuracy of the inspection result of the first defect and the inspection result of the second defect.

In one of the embodiments, the obtaining a second inspection region in the three-dimensional image includes:

preprocessing the three-dimensional image to obtain point cloud data of the target material; and
determining the second inspection region based on the point cloud data.

In this embodiment of this application, the second inspection region is determined based on the point cloud data corresponding to the three-dimensional image of the target material, improving the accuracy of extraction of the second inspection region.

In one of the embodiments, the checking the inspection result of first defect based on the first inspection region includes:

obtaining planar features of the first inspection region; and
determining the inspection result of the first defect based on the planar features.

In this embodiment of this application, the planar features of the first inspection region are obtained, and the determination of a defect without height information is made based on the planar features, improving the accuracy of the defect inspection.

In one of the embodiments, the checking the inspection result of second defect based on the second inspection region includes:

obtaining a distance between a weld bead height of the target material and a top cover reference surface of the material in the second inspection region; and
determining the inspection result of the second defect based on the distance.

In this embodiment of this application, the inspection result of a defect with height information in the target material can be determined based on the distance, ensuring the precision of the defect inspection.

In one of the embodiments, the method further includes:
sending the defect inspection result of the target material to the upper-level computer; and/or displaying the defect inspection result of the target material on a front-end interface. In this embodiment, sending the defect inspection result of the target material to the upper-level computer may allow the upper-level computer to accurately obtain the defect inspection result in a timely manner; and displaying the defect inspection result of the target material on a front-end interface can make it more intuitive to know the defect information of the target material.

According to a second aspect, this application further provides a defect inspection system, where the system includes: a support frame, a camera device arranged on the support frame, a control device communicatively connected to the camera device, an upper-level computer communicatively connected to the control device, and inspection workstations arranged below the support frame; the camera device being a structured light camera device integrating a two-dimensional image acquisition function and a three-dimensional image acquisition function; where

the inspection workstation is configured to carry the target material to be inspected;
the upper-level computer is configured to send an inspection instruction for the target material to the control device; and
the control device is configured to control the camera device to acquire a two-dimensional image and a three-dimensional image of the target material, and determine a defect inspection result of the target material based on the two-dimensional image and the three-dimensional image of the target material.

In this embodiment of this application, the defect inspection system is designed with a support frame, a camera device arranged on the support frame, a control device communicatively connected to the camera device, an upper-level computer communicatively connected to the control device, and an inspection workstation arranged below the support frame. When the target material to be inspected reaches an inspection workstation, the upper-level computer sends an inspection instruction for the target material to the control device, and then the control device controls the camera device to acquire a two-dimensional image and a three-dimensional image of the target material, and determine a defect inspection result of the target material based on the two-dimensional image and the three-dimensional image of the target material. In this system, because the camera device is a structured light camera device integrating a two-dimensional image acquisition function and a three-dimensional image acquisition function, in the process of acquiring the two-dimensional image and the three-dimensional image, the two-dimensional image and the three-dimensional image can be acquired without the need of switching camera devices, ensuring the convenience of image acquisition and thereby improving the convenience of defect inspection of the target material. Moreover, the use of the same camera device to acquire the two-dimensional image and the three-dimensional image ensures that the two-dimensional image and the three-dimensional image that are acquired are in the same coordinate system. Therefore, in defect inspection using the two-dimensional image and the three-dimensional image, preprocessing on the two images needs not too many complicated data unification operations, thereby improving the efficiency of defect inspection of the target material. In addition, the two-dimensional image and the three-dimensional image of the target material in two different dimensions are used for defect inspection of the target material, and such multi-dimensional information basis ensures the comprehensiveness of defect inspection of the target material, avoids the problem of erroneous determination due to single image inspection with the two-dimensional image or the three-dimensional image, and improves the accuracy of the defect inspection.

In one of the embodiments, the system further includes a lifting apparatus; the lifting apparatus is arranged on the support frame, with the camera device mounted on the lifting apparatus; and a plurality of inspection workstations are included below the support frame.

The control device is configured to control the lifting apparatus to move the camera device to a position at each inspection workstation to acquire a two-dimensional image and a three-dimensional image of a product under inspection in each inspection workstation.

In this embodiment of this application, the lifting apparatus is designed on the support frame in the defect inspection system, with the camera device mounted on the lifting apparatus; and a plurality of inspection workstations are included below the support frame. The control device can be used to control the lifting apparatus to move the camera device to a position of each inspection workstation to acquire a two-dimensional image and a three-dimensional image of a product under inspection in each inspection workstation. In this system, the acquisition of images of a plurality of products under inspection can be implemented by moving the camera device using the lifting apparatus, ensuring the convenience of defect inspection of the target material. Furthermore, in image acquisition after the movement of the camera device, each product under inspection is within a view of field of the camera device, and there is no incomplete acquisition of image.

In one of the embodiments, the system further includes a sliding assembly and a two-dimensional light supplementation device, the sliding assembly being arranged on the support frame and located below the lifting apparatus and the two-dimensional light supplementation device being arranged on the sliding assembly.

The control device is configured to control the camera device to acquire a two-dimensional image of a product under inspection in each inspection workstation under the condition that the two-dimensional light supplementation device is turned on, and send a movement instruction to the upper-level computer after the acquisition of the two-dimensional image of the product under inspection in each inspection workstation is completed, the movement instruction being used to instruct the upper-level computer to move the two-dimensional light supplementation device to a next inspection workstation through the sliding assembly.

In this embodiment of this application, the defect inspection system is designed with a sliding assembly and a two-dimensional light supplementation device, with the two-dimensional light supplementation device arranged on the sliding assembly. After the camera device acquires the two-dimensional image of the product under inspection in the current inspection workstation, the two-dimensional light supplementation device is moved to the next inspection workstation through the sliding assembly, enabling the camera device to perform acquisition for the next inspection workstation under the condition that the two-dimensional light supplementation device is turned on, avoiding the problem of unclear images due to lack of lighting during acquisition of the two-dimensional image, thereby improving the clarity of the two-dimensional image of the product under inspection in each inspection workstation and ensuring the accuracy of subsequent defect inspection.

In one of the embodiments, the system further includes a three-dimensional light supplementation device, the three-dimensional light supplementation device being arranged at a preset distance above each inspection workstation.

The control device is configured to control the camera device to acquire a three-dimensional image of a product under inspection at a corresponding inspection workstation under the condition that the three-dimensional light supplementation device is turned on.

In this embodiment of this application, the defect inspection system includes a three-dimensional light supplementation device arranged at a preset distance above each inspection workstation, enabling the camera device to acquire a three-dimensional image for each inspection workstation under the condition that the three-dimensional light supplementation device is turned on, avoiding the problem of unclear images due to uneven lighting or lack of lighting during acquisition of the three-dimensional image, thereby ensuring the clarity of the three-dimensional images and the accuracy of subsequent defect inspection.

In one of the embodiments, the system further includes a press-fitting apparatus, the press-fitting apparatus being communicatively connected to the upper-level computer.

The upper-level computer is further configured to control the press-fitting apparatus to perform a downward pressing operation on the target material after detecting that the target material has entered the inspection workstation and then send the inspection instruction to the control device; where a coverage area of the press-fitting apparatus is greater than or equal to a top surface area of the target material.

In this embodiment of this application, the system is designed with the press-fitting apparatus. After the target material has entered the inspection workstation, the press-fitting apparatus is used to perform a downward pressing operation on the target material. In this way, when the target material includes a plurality of products under inspection, the height of the plurality of products under inspection can be unified to ensure that the plurality of products under inspection are at the same level, avoiding loss of pixels in the image due to camera depth of field.

In one of the embodiments, the press-fitting apparatus is provided with a cavity structure at each position corresponding to an inspection workstation, and the three-dimensional light supplementation device is an annular lighting device arranged around inner side of the cavity.

The cavity structure is configured to align the camera device with a product under inspection in each inspection workstation.

In this embodiment of the present application, the press-fitting apparatus in this system is provided with a cavity structure at each position corresponding to an inspection workstation, allowing the camera device to acquire the two-dimensional image and the three-dimensional image of the target material through the cavity of the press-fitting apparatus. Additionally, the three-dimensional light supplementation device is arranged on the annular lighting device around the inner side of the cavity, ensuring that the camera device can clearly acquire the images of each product under inspection when acquiring the images of the target material, thereby improving the accuracy of the images.

According to a third aspect, this application provides a defect inspection apparatus, where the apparatus includes:

> an image acquiring module, configured to, in response to an inspection instruction for a target material, control a camera device to acquire a two-dimensional image and a three-dimensional image of the target material; the camera device being a structured light camera device integrating a two-dimensional image acquisition function and a three-dimensional image acquisition function; and
> a defect determining module, configured to determine a defect inspection result of the target material based on the two-dimensional image and the three-dimensional image of the target material.

According to a fourth aspect, an embodiment of this application provides a computer device including a memory and a processor, where a computer program is stored in the memory, and when the computer program is executed by the processor, the steps of any one of the methods according to the embodiments of the first aspect are implemented.

According to a fifth aspect, an embodiment of this application provides a computer-readable storage medium storing a computer program thereon, and when the computer program is executed by a processor, the steps of any one of the methods according to the embodiments of the first aspect are implemented.

According to a sixth aspect, an embodiment of this application provides a computer program product including a computer program, where the computer program is executed by a processor, the steps of any one of the methods according to the embodiments of the first aspect are implemented.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

## BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts. In the accompanying drawings:

FIG. 1 is a schematic architectural diagram of a defect inspection system according to an embodiment;
FIG. 2 is a schematic structural diagram of a product under inspection according to an embodiment;
FIG. 3 is a schematic architectural diagram of a defect inspection system according to another embodiment;
FIG. 4 is a schematic architectural diagram of a defect inspection system according to another embodiment;
FIG. 5 is a schematic architectural diagram of a defect inspection system according to another embodiment;
FIG. 6 is a schematic architectural diagram of a defect inspection system according to another embodiment;
FIG. 7 is a schematic structural diagram of an image acquisition device according to an embodiment;
FIG. 8 is a schematic structural diagram of an image acquisition device according to another embodiment;
FIG. 9 is a schematic flowchart of a defect inspection method according to an embodiment;
FIG. 10 is a schematic flowchart of a defect inspection method according to another embodiment;
FIG. 11 is a schematic flowchart of a defect inspection method according to another embodiment;
FIG. 12 is a schematic flowchart of a defect inspection method according to another embodiment;
FIG. 13 is a schematic flowchart of a defect inspection method according to another embodiment;
FIG. 14 is a schematic flowchart of a defect inspection method according to another embodiment;
FIG. 15 is a schematic flowchart of a defect inspection method according to another embodiment;
FIG. 16 is a schematic flowchart of a defect inspection method according to another embodiment;
FIG. 17 is a schematic flowchart of a defect inspection method according to another embodiment;
FIG. 18 is a schematic flowchart of a defect inspection method according to another embodiment;
FIG. 19 is a schematic flowchart of a defect inspection method according to another embodiment;
FIG. 20 is a structural block diagram of a defect inspection apparatus according to an embodiment; and
FIG. 21 is an internal structural diagram of a computer device according to an embodiment.

Reference signs:

100. defect inspection system; 101. support frame; 102. camera device; 103. control device; 104. upper-level computer; 105. inspection workstation; 106. target material; 301. lifting apparatus; 302. product under inspection; 401. two-dimensional light supplementation device; 402. sliding assembly; 501. three-dimensional light supplementation device; 601. press-fitting apparatus; 701. camera movement axis; 702. two-dimensional light supplementation device movement axis; 703. two-dimensional light supplementation device; 704. camera device; 705. three-dimensional light supplementation device; 706. product under inspection; 707. press-fitting apparatus; 708. camera device moving direction; 801. camera device gantry; 802. camera device; 803. projector; 804. shadowless light; 805. annular light; and 806. shadowless light holder.

## DETAILED DESCRIPTION

The following describes in detail embodiments of technical solutions of this application with reference to the accompanying drawings. The following embodiments are merely intended for a clearer description of the technical solutions of this application and therefore are used as just examples which do not constitute any limitations on the protection scope of this application.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may combine with another embodiment. Unless otherwise defined, all technical and scientific terms used herein shall have the same meanings as commonly understood by persons skilled in the art to which this application relates. The terms used herein are intended to merely describe the specific embodiments rather than to limit this application. The terms "include" and any other variations thereof in the specification, claims and brief description of drawings of this application are intended to cover non-exclusive inclusions.

In the description of some embodiments of this application, the technical terms "first," "second," and the like are merely intended to distinguish between different objects, and shall not be understood as any indication or implication of relative importance or any implicit indication of the number, sequence or primary-secondary relationship of the technical features indicated. In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In this application, the term "plurality of" means more than two (inclusive). In the descriptions of the embodiments of this application, orientations or positional relationships indicated by the technical terms "up," "down," "level," "inside," and the like are based on the orientation or positional relationships shown in the accompanying drawings, and are merely for ease and brevity of description of the embodiments of this application rather than indicating or implying that the means or elements mentioned must have specific orientations or must be constructed or manipulated according to specific orientations, and therefore shall not be construed as any limitation on the embodiments of this application. In the description of the embodiments of this application, unless otherwise specified and defined explicitly, the terms "connection," "join," and the like should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two components, or an interactive relationship between two components. Persons of ordinary skill in the art can understand specific meanings of these terms in the embodiments of this application as suitable to specific situations.

In a power battery system, for a battery after second electrolyte injection, to ensure the sealing of the battery after electrolyte injection, the sealing of the battery needs to be guaranteed in a manner of welding of sealing nails following pressing of glue nails. However, after welding of sealing nails following pressing of glue nails, the battery after second electrolyte injection may have defect issues such as poor weld height and broken welds.

To inspect defects after welding of sealing nails, the applicant has found through research that a combination of a two-dimensional camera and a three-dimensional line scan camera can be used for defect inspection after welding of sealing nails. However, the combination of the two-dimensional camera and the three-dimensional line scan camera has significant drawbacks. For example, the two-dimensional images acquired by the combination of the two-dimensional camera and the three-dimensional line scan camera have severe blackening at the outer edge, and the three-dimensional images acquired have severe pixel loss, leading to a high erroneous determination rate of the algorithm and low inspection accuracy. For another example, the two-dimensional camera and the three-dimensional line scan camera are different cameras, resulting in the algorithm requirement for spatial alignment of the two-dimensional image and the three-dimensional image being high and defect inspection efficiency being low. For another example, the acquisition of a two-dimensional image and a three-dimensional image requires moving the position of the two-dimensional camera or the three-dimensional line scan camera, resulting in inconvenience during defect inspection.

In view of the foregoing considerations, to solve the problems of inconvenience, inefficiency, and low accuracy in defect inspection after welding of sealing nails, the applicant has proposed, through in-depth research, a defect inspection method by using a 3D structured light camera to acquire a two-dimensional image and a three-dimensional image of a target material and perform defect inspection on the two-dimensional image and the three-dimensional image.

In such a defect inspection design, the 3D structured light camera can simultaneously acquire a two-dimensional image and a three-dimensional image without the need of moving the 3D structured light camera, improving the convenience in the defect inspection process. Moreover, images acquired by the 3D structured light camera have high accuracy without problems of blackening at the outer edge and pixel loss, ensuring the accuracy of the defect inspection. In addition, the 3D structured light camera has been internally calibrated, ensuring that the two-dimensional image and the three-dimensional image that are acquired are in the same calibration position. This reduces the computational complexity when spatial alignment is performed on the two-dimensional image and the three-dimensional image, solving the problem of algorithm processing timeouts caused by the spatial alignment of the two-dimensional/three-dimensional image, thereby improving defect inspection efficiency.

It should be understood that the technical effects achievable by the defect inspection method provided in this embodiment of this application are not limited thereto, and other technical effects can also be achieved. For example, incoming battery cells cannot be guaranteed to be at the same height, leading to image pixel loss due to the camera depth of field issue and thereby causing erroneous determination in inspection or the like, which is solved. Specific technical effects achievable in this embodiment of this application can be found in the following embodiments.

It should be noted that the defect inspection solution provided in this application is applicable to all welding related fields and compatible with stepped nail welding and other new process welding, which is not limited in the embodiments of this application.

The defect inspection method provided in the embodiments of this application is applied to a defect inspection system provided in an embodiment of this application. The defect inspection system is used to output a defect inspection result when a defect is detected in the target material. The defect inspection system can be implemented entirely or partially through software, hardware, and their combination. Therefore, in describing the process of the defect inspection method, the defect inspection system provided in the embodiment of this application is first described.

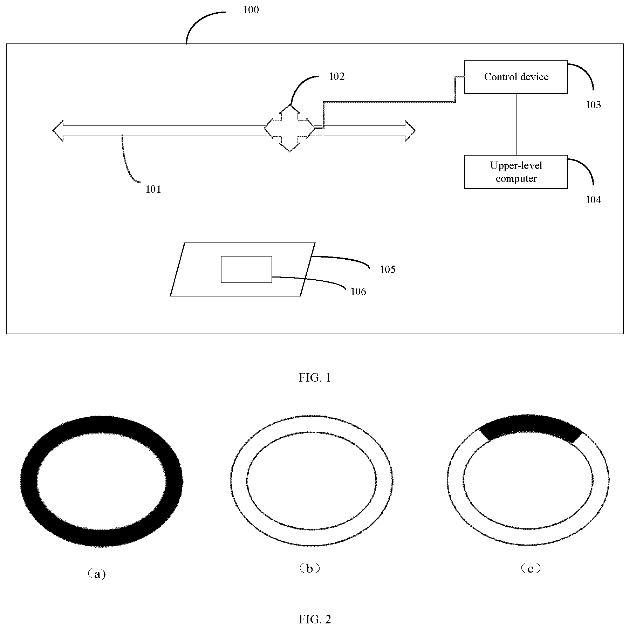

As shown in FIG. 1, a defect inspection system 100 includes: a support frame 101, a camera device 102 arranged on the support frame 101, a control device 103 communicatively connected to the camera device, an upper-level computer 104 communicatively connected to the control device 103, and inspection workstations 105 arranged below the support frame. The camera device 102 is a structured light camera device integrating a two-dimensional image acquisition function and a three-dimensional image acquisition function. The inspection workstation 105 is configured to carry a target material 106 to be inspected. The upper-level computer 104 is configured to send an inspection instruction for the target material 106 to the control device 103. The control device 103 is configured to control the camera device 102 to acquire a two-dimensional image and a three-dimensional image of the target material and determine a defect inspection result of the target material 106 based on the two-dimensional image and the three-dimensional image of the target material 106.

In this embodiment, the support frame is configured to support the camera device. After receiving the inspection instruction for the target material, the control device controls the camera device to acquire the two-dimensional image and the three-dimensional image of the target material placed on the inspection workstation. After acquiring the two-dimensional image and the three-dimensional image of the target material, the camera device sends the two-dimensional image and the three-dimensional image to the control device. The control device determines the defect inspection result of the target material based on the two-dimensional image and the three-dimensional image of the target material received.

The control device may be but is not limited to various personal computers, laptop computers, or tablet computers. The control device and the camera device may be connected through a USB port, and the upper-level computer and the control device may be connected through a cable.

The target material is the material to be inspected, and the target material may include one or a plurality of products under inspection. Accordingly, if there are a plurality of products under inspection, there may be one or a plurality of inspection workstations, meaning that one inspection workstation corresponds to a plurality of target materials, or one inspection workstation corresponds to one target material.

Taking a scenario of battery cells welded after second electrolyte injection in a power battery system as an example, to ensure the sealing of the battery after electrolyte injection, welding of sealing nails following pressing of glue nails needs to be performed for the battery after second electrolyte injection. To verify the sealing performance of the battery, defect inspection after welding of the sealing nails can be performed on the battery. Therefore, the target material may be a battery cell after welding of the sealing nails. It should be noted that the target material may alternatively be a battery cell after welding of the sealing nails following multiple electrolyte injections.

Therefore, in the process of defect inspection after welding of sealing nails following the second electrolyte injection using the defect inspection system provided in the embodiments of this application, four battery cells can be welded side by side in a sealing nail welding machine, then, the battery cells after welding of the sealing nails are placed in a tooling fixture of a rotary table. Taking the upper-level computer as a programmable logic controller (Programmable logic Controller, PLC) as an example, the PLC controls the battery cells after welding of the sealing nails to move to inspection workstations with the fixture. During the moving and after reaching the inspection workstation, a target material can be placed in the tooling fixture of the rotary table to ensure the stability of the target material.

The inspection instruction indicates the need to inspect the target material. The inspection instruction may include quick response code information of the target material. The quick response code information may indicate the number, attribute information, or the like of the target material and can uniquely identify the target material. The inspection instruction may be sent by the upper-level computer to the control device. The upper-level computer can control the target material to reach a preset inspection position. After controlling the target material to reach the inspection position, the upper-level computer generates an inspection instruction based on the target material and sends the inspection instruction to the control device to enable the control device to inspect the target material.

For example, continuing the above example, after the battery cell moves into the inspection workstation, the PLC sends a signal of the battery cell reaching the inspection workstation to the control device. When the control device receives the signal, it indicates that the inspection instruction for the target material has been received. At this point, the control device controls the camera device to acquire a two-dimensional image and a three-dimensional image of the target material.

The two-dimensional image represents two-dimensional planar image information at the pixel scale, and the three-dimensional image acquired using the 3D structured light camera is a depth image. Each pixel of the depth image reflects a distance from the target material to the 3D structured light camera. For example, the format of the three-dimensional image can be tif format.

The camera device is a structured light camera device integrating a two-dimensional image acquisition function and a three-dimensional image acquisition function. For example, the camera device can be a 3D structured light camera.

The 3D structured light camera mainly includes an infrared camera and a laser dot projector. The laser dot projector is used to project a structured light pattern (speckle pattern) onto a target scene, and the infrared camera acquires an infrared structured light image of the target. Since the 3D structured light camera uses multiple gratings for encoding, the encoding accuracy can in principle be refined to one pixel or even sub-pixel, resulting in higher point cloud quality and accuracy as compared with other principles. Moreover, the 3D structured light camera acquires the three-dimensional image of the product under inspection at the current inspection workstation using a phase-shifting method. Compared with the three-dimensional line scan laser, the phase-shifting method in the 3D structured light camera has a larger projection dimension, ensuring that the 3D structured light camera can capture more material information, greatly improving imaging speed and image quality.

Furthermore, the 3D structured light camera has been internally calibrated, avoiding the process of recalibration and reducing the process flow. The 3D structured light camera is compatible with a variety of welding process products, such as stepped nails (the weld bead height is higher than that of ordinary nails), demonstrating that the 3D structured light camera has higher compatibility.

Moreover, an imaging module in the 3D structured light camera has more convenient and efficient data management and configuration management, making it easy to change parameters.

After acquiring the two-dimensional image and the three-dimensional image of the target material, the camera device can send the two-dimensional image and the three-dimensional image of the target material to the control device. The control device inspects the two-dimensional image and the three-dimensional image of the target material and determines a defect inspection result of the target material.

Continuing with the scenario of a battery after second electrolyte injection in a power battery system as an example, the general requirements for the weld bead after welding of the sealing nails include: Unwelded, fused, or broken sealing nail is unacceptable; improper weld height is also unacceptable, with the weld height within 0.1 mm of a specified height; and defects such as pinhole, blowhole, and offset weld need to be within specified ranges.

Therefore, the defect inspection result of the battery cell may be a defect category of the target material after welding of the sealing nails, such as unwelded, fused, broken weld, pinhole, blowhole, and offset weld. As shown in FIG. 2, FIG. 2(a) shows a schematic diagram of an unwelded battery cell, FIG. 2 (b) shows a schematic diagram of a successfully welded battery cell, and FIG. 2(c) shows a schematic diagram of a battery cell with a broken weld.

In this embodiment of this application, the defect inspection system is designed with a support frame, a camera device arranged on the support frame, a control device communicatively connected to the camera device, an upper-level computer communicatively connected to the control device, and an inspection workstation arranged below the support frame. When the target material to be inspected reaches an inspection workstation, the upper-level computer sends an inspection instruction for the target material to the control device, and then the control device controls the camera device to acquire a two-dimensional image and a three-dimensional image of the target material, and determine a defect inspection result of the target material based on the two-dimensional image and the three-dimensional image of the target material. In this system, because the camera device is a structured light camera device integrating a two-dimensional image acquisition function and a three-dimensional image acquisition function, in the process of acquiring the two-dimensional image and the three-dimensional image, the two-dimensional image and the three-dimensional image can be acquired without the need of switching camera devices, ensuring the convenience of image acquisition and thereby improving the convenience of defect inspection of the target material. Moreover, the use of the same camera device to acquire the two-dimensional image and the three-dimensional image ensures that the two-dimensional image and the three-dimensional image that are acquired are in the same coordinate system. Therefore, in defect inspection using the two-dimensional image and the three-dimensional image, preprocessing on the two images needs not too many complicated data unification operations, thereby improving the efficiency of defect inspection of the target material. In addition, the two-dimensional image and the three-dimensional image of the target material in two different dimensions are used for defect inspection of the target material, and such multi-dimensional information basis ensures the comprehensiveness of defect inspection of the target material, avoids the problem of erroneous determination due to single image inspection with the two-dimensional image or the three-dimensional image, and improves the accuracy of the defect inspection.

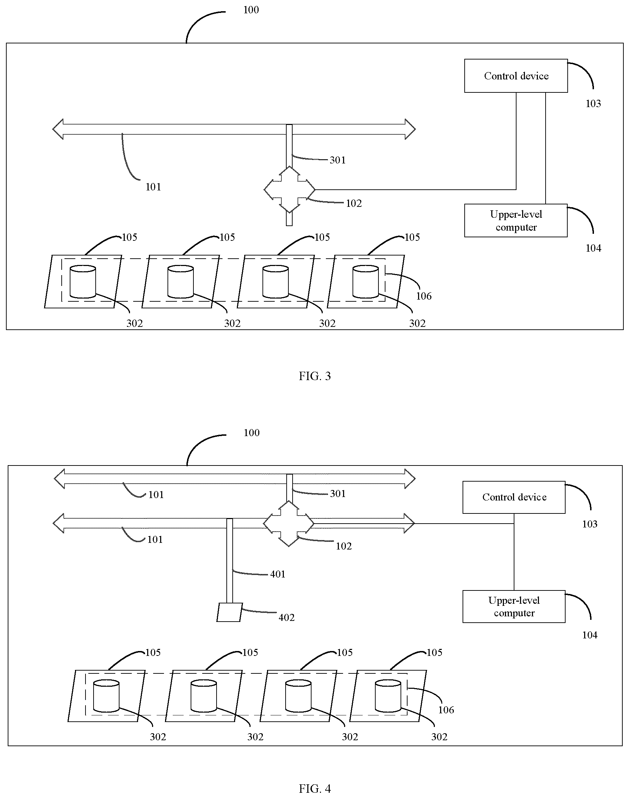

Next, description is made using an example in which a target material includes a plurality of products under inspection, and a defect inspection system includes a plurality of inspection workstations, with an inspection workstation corresponding to a product under inspection. In one embodiment, as shown in FIG. 3, the system 100 further includes a lifting apparatus 301; the lifting apparatus 301 is arranged on the support frame, with the camera device mounted on the lifting apparatus 301; and a plurality of inspection workstations 105 are included below the support frame 101; the control device 103 is configured to control the lifting apparatus 301 to move the camera device 102 to a position at each inspection workstation 105 to acquire a two-dimensional image and a three-dimensional image of a product under inspection 302 in each inspection workstation 105.

It should be noted that in FIG. 2, the example shows four inspection workstations, corresponding to four products under inspection. In actual applications, the number of inspection workstations can be set as required. Moreover, the example of the product under inspection in FIG. 3 is a cylinder, but in actual applications, the shape of the product under inspection is not limited.

In actual applications, the target material may refer to a material that includes a plurality of products under inspection. In this case, each product under inspection is at a different inspection workstation.

In scenarios with a plurality of inspection workstations, the camera device can acquire a two-dimensional image and a three-dimensional image of each product under inspection in sequence according to an order of the inspection workstations. For example, if there are four inspection workstations and correspondingly there are four products under inspection in each inspection workstation, the control device can control the camera device through controlling the lifting apparatus to first acquire a two-dimensional image and a three-dimensional image of a product under inspection in the first inspection workstation, then acquire a two-dimensional image and a three-dimensional image of a product under inspection in a second inspection workstation. The acquisition is performed sequentially for one inspection workstation after another, until two-dimensional images and three-dimensional images are acquired for products under inspection in all inspection workstations.

Specifically, the control device sequentially acquires a two-dimensional image and a three-dimensional image of a product under inspection in each inspection workstation. When receiving an inspection instruction sent by an upper-level computer, the control device sends an acquisition instruction to the camera device to control the camera device to acquire a two-dimensional image and a three-dimensional image of a product under inspection in the first workstation. At this point, the camera device is at a position corresponding to the first inspection workstation. After completing the acquisition for the product under inspection in the first inspection workstation, the camera device sends an acquisition complete instruction to the control device. The control device controls the lifting apparatus to move the camera device to a position at the second inspection workstation, to continue the acquisition of a two-dimensional image and a three-dimensional image of a product under inspection in the second inspection workstation, and so on, until two-dimensional images and three-dimensional images are acquired for products under inspection in all inspection workstations. The control device controls the lifting apparatus to move the camera device to the position at the first inspection workstation.

The lifting apparatus can move up and down, left and right, to control the camera device to move to the position at each inspection workstation, ensuring that the camera device can accurately acquire images of each product under inspection.

In some embodiments, a plurality of products under inspection can be placed in one tooling fixture of the rotary table, or one product under inspection can correspond to one tooling fixture.

Continuing with the scenario of products under inspection as battery cells welded after second electrolyte injection as an example, the control device can control the lifting apparatus to move the camera device to the position at each battery cell to acquire a two-dimensional image and a three-dimensional image of each battery cell. For example, if there are four battery cells, the control device can sequentially acquire a two-dimensional image and a three-dimensional image of each battery cell in order. Specifically, the control device controls the lifting apparatus to move the camera device to a position at a first battery cell, the camera device acquires a two-dimensional image and a three-dimensional image of the first battery cell, and after the acquisition of the two-dimensional image and the three-dimensional image of the first battery cell is completed, the control device controls the lifting apparatus to move the camera device to a position at a second battery cell, and the camera device acquires a two-dimensional image and a three-dimensional image of the second battery cell. The acquisition is performed sequentially for one battery cell after another, until two-dimensional images and three-dimensional images of all battery cells are acquired.

In some embodiments, after the acquisition of the two-dimensional image and the three-dimensional image of the last battery cell is completed, the control device can control the lifting apparatus to move the camera device to the position at the first battery cell, that is, at the first inspection workstation.

In this embodiment of this application, the lifting apparatus is designed on the support frame in the defect inspection system, with the camera device mounted on the lifting apparatus; and a plurality of inspection workstations are included below the support frame. The control device can be used to control the lifting apparatus to move the camera device to a position of each inspection workstation to acquire a two-dimensional image and a three-dimensional image of a product under inspection in each inspection workstation. In this system, the acquisition of images of a plurality of products under inspection can be implemented by moving the camera device using the lifting apparatus, ensuring the convenience of defect inspection of the target material. Furthermore, in image acquisition after the movement of the camera device, each product under inspection is within a view of field of the camera device, and there is no incomplete acquisition of image.

In one embodiment, as shown in FIG. 4, the system 100 further includes a sliding assembly 401 and a two-dimensional light supplementation device 402, the sliding assembly 401 being arranged on the support frame 201 and located below the lifting apparatus 301 and the two-dimensional light supplementation device 402 being arranged on the sliding assembly 401. The control device 103 is configured to control the camera device 102 to acquire a two-dimensional image of a product under inspection 302 in each inspection workstation 105 under the condition that the two-dimensional light supplementation device 402 is turned on, and send a movement instruction to the upper-level computer 104 after the acquisition of the two-dimensional image of the product under inspection 302 in each inspection workstation 105 is completed, the movement instruction being used to instruct the upper-level computer 104 to move the two-dimensional light supplementation device 402 to a next inspection workstation 105 through the sliding assembly 401.

The camera device acquires the two-dimensional image of the product under inspection in each inspection workstation under the condition that the two-dimensional light supplementation device is turned on. The camera device sequentially acquires the two-dimensional image of the product under inspection in each inspection workstation. For example, if there are four inspection workstations and correspondingly there are four products under inspection in each inspection workstation, the two-dimensional light supplementation device is moved to a corresponding inspection workstation through the sliding assembly. The control device controls the camera device to first acquire a two-dimensional image of a product under inspection in a first inspection workstation under the condition that the two-dimensional light supplementation device is turned on. After the acquisition of the two-dimensional image of the product under inspection in the first inspection workstation is completed, the camera device sends a movement instruction to the upper-level computer. The upper-level computer controls the two-dimensional light supplementation device to move to a second inspection workstation. When the operation for a product under inspection in the second inspection workstation is completed, the upper-level computer controls the two-dimensional light supplementation device to move to a third inspection workstation. In this way, the acquisition is performed for one inspection workstation after another, until two-dimensional images and three-dimensional images are acquired for products under inspection in all inspection workstations.

The two-dimensional light supplementation device can move on the sliding assembly to ensure that it can move to each inspection workstation. The upper-level computer and the two-dimensional light supplementation device may be connected through a cable. The two-dimensional light supplementation device and the control device may be connected through a cable.

In some embodiments, the two-dimensional light supplementation device may be a shadowless light source.

In this embodiment of this application, the defect inspection system is designed with a sliding assembly and a two-dimensional light supplementation device, with the two-dimensional light supplementation device arranged on the sliding assembly. After the camera device acquires the two-dimensional image of the product under inspection in the current inspection workstation, the two-dimensional light supplementation device is moved to the next inspection workstation through the sliding assembly, enabling the camera device to perform acquisition for the next inspection workstation under the condition that the two-dimensional light supplementation device is turned on, avoiding the problem of unclear images due to lack of lighting during acquisition of the two-dimensional image, thereby improving the clarity of the two-dimensional image of the product under inspection in each inspection workstation and ensuring the accuracy of subsequent defect inspection.

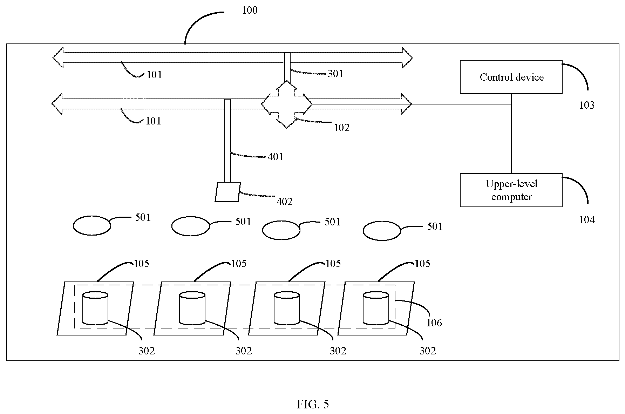

In one embodiment, as shown in FIG. 5, the system 100 further includes a three-dimensional light supplementation device 501, the three-dimensional light supplementation device 501 being arranged at a preset distance above each inspection workstation 105; and the control device 103 is configured to control the camera device 102 to acquire a three-dimensional image of a product under inspection 302 at a corresponding inspection workstation 105 under the condition that the three-dimensional light supplementation device 501 is turned on.

The control device controls the camera device to acquire the three-dimensional image of the product under inspection at the corresponding inspection workstation under the condition that the three-dimensional light supplementation device is turned on. The three-dimensional light supplementation device is turned on when a turn-on instruction is sent to the three-dimensional light supplementation device by the control device after receiving the inspection instruction for the target material or when the upper-level computer sends a turn-on instruction to the three-dimensional light supplementation device after the camera device completes the acquisition of the two-dimensional image.

Based on the foregoing embodiment, the camera device acquires a two-dimensional image of a product under inspection in each inspection workstation under the condition that the two-dimensional light supplementation device is turned on and acquires a three-dimensional image of the product under inspection at the corresponding inspection workstation under the condition that the three-dimensional light supplementation device is turned on. The camera device sequentially acquires the two-dimensional image and the three-dimensional image of the product under inspection in each inspection workstation. For example, if there are four inspection workstations and correspondingly there are four products under inspection in each inspection workstation, the two-dimensional light supplementation device is moved to a corresponding inspection workstation through the sliding assembly. The control device controls the camera device to first acquire a two-dimensional image of a product under inspection in a first inspection workstation under the condition that the two-dimensional light supplementation device is turned on. After the acquisition of the two-dimensional image of the product under inspection in the first inspection workstation is completed, the camera device sends a movement instruction to the upper-level computer. The upper-level computer controls the two-dimensional light supplementation device to move to a second inspection workstation. The camera device acquires a three-dimensional image of the product under inspection in the first inspection workstation under the condition that the three-dimensional light supplementation device is turned on. After the camera device acquires the two-dimensional image and the three-dimensional images of the product under inspection in the first inspection workstation, the control device controls the camera device to move to the second inspection workstation through the lifting apparatus. Similarly, the camera device acquires a two-dimensional image and a three-dimensional image of a product under inspection in a second inspection workstation, and the acquisition is performed for one inspection workstation after another, until two-dimensional images and three-dimensional images are acquired for products under inspection in all inspection workstations.

The three-dimensional light supplementation device and the control device may be connected through a cable; and the three-dimensional light supplementation device may be a shadowless light source.

In this embodiment of this application, the defect inspection system includes a three-dimensional light supplementation device arranged at a preset distance above each inspection workstation, enabling the camera device to acquire a three-dimensional image for each inspection workstation under the condition that the three-dimensional light supplementation device is turned on, avoiding the problem of unclear images due to uneven lighting or lack of lighting during acquisition of the three-dimensional image, thereby ensuring the clarity of the three-dimensional images and the accuracy of subsequent defect inspection.

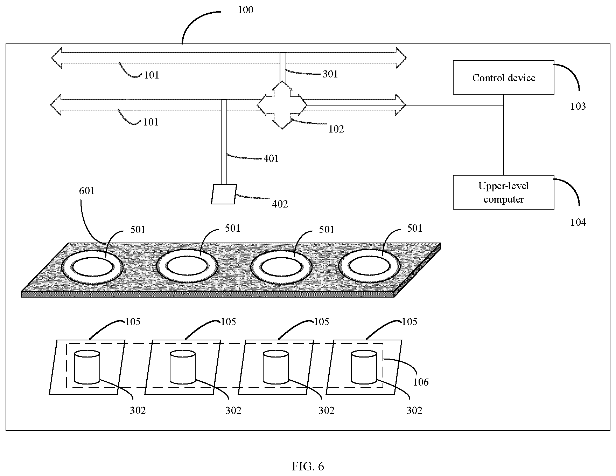

In one embodiment, as shown in FIG. 6, the system 100 further includes a press-fitting apparatus 601, the press-fitting apparatus 601 being communicatively connected to the upper-level computer 303. The upper-level computer 104 is further configured to control the press-fitting apparatus 601 to perform a downward pressing operation on the target material 106 after detecting that the target material 106 has entered the inspection workstation and then send the inspection instruction to the control device 103; where a coverage area of the press-fitting apparatus 601 is greater than or equal to a top surface area of the target material 106.

When the upper-level computer detects that the target material has entered the inspection workstation, the upper-level computer controls the press-fitting apparatus to perform a downward pressing operation on the target material. After the downward pressing operation, the upper-level computer sends an inspection instruction to the control device. The control device and the upper-level computer may be connected through a network cable.

The downward pressing operation is used to unify the height of all products under inspection in the target material, ensuring that all products under inspection are at the same level, greatly avoiding loss of pixels in the image due to camera depth of field.

The press-fitting apparatus may be a cover plate, and the coverage area of the press-fitting apparatus is greater than or equal to the top surface area of the target material to ensure that the press-fitting apparatus can accurately perform the downward pressing operation on the target material, avoiding uneven height of the products under inspection in the target material due to the press-fitting apparatus having a coverage area being smaller than that of the target material.

In this embodiment of this application, the system is designed with the press-fitting apparatus. After the target material has entered the inspection workstation, the press-fitting apparatus is used to perform a downward pressing operation on the target material. In this way, when the target material includes a plurality of products under inspection, the height of the plurality of products under inspection can be unified to ensure that the plurality of products under inspection are at the same level, avoiding loss of pixels in the image due to camera depth of field.

In one embodiment, continuing to refer to FIG. 6, the press-fitting apparatus 601 is provided with a cavity structure at each position corresponding to an inspection workstation 105, and the three-dimensional light supplementation device 501 is an annular lighting device arranged around inner side of the cavity; where the cavity structure is configured to align the camera device 102 with the product under inspection 201 at each inspection workstation 105.

The press-fitting apparatus is provided with a cavity structure. The cavity structure corresponds to an inspection workstation, and the three-dimensional light supplementation device is arranged around inner side of the cavity as an annular lighting device.

One cavity structure corresponds to one inspection workstation, ensuring that the camera device can acquire the product under inspection through the cavity. In addition, one three-dimensional light supplementation device is arranged on inner side of one cavity, avoiding the issue of unclear three-dimensional images acquired by the camera device due to lighting problems.

In this embodiment of the present application, the press-fitting apparatus in this system is provided with a cavity structure at each position corresponding to an inspection workstation, allowing the camera device to acquire the two-dimensional image and the three-dimensional image of the target material through the cavity of the press-fitting apparatus. Additionally, the three-dimensional light supplementation device is arranged on the annular lighting device around the inner side of the cavity, ensuring that the camera device can clearly acquire the images of each product under inspection when acquiring the images of the target material, thereby improving the accuracy of the images.

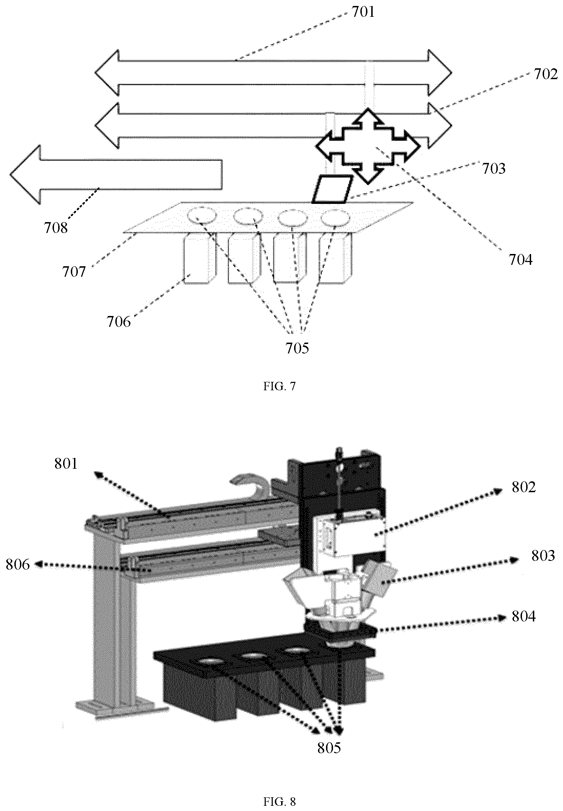

As shown in FIG. 7 and FIG. 8, FIG. 7 is a simplified schematic diagram of motions during image acquisition, and FIG. 8 is a schematic diagram of a hardware structure for image acquisition. In FIG. 7, 701 represents a camera movement axis, 702 represents a two-dimensional light supplementation device movement axis, 703 represents a two-dimensional light supplementation device, 704 represents a camera device, four arrows respectively represent four three-dimensional light sources, 705 represents a three-dimensional light supplementation device, 706 represents a product under inspection, 707 represents a press-fitting apparatus, and 708 represents a camera device moving direction.

In FIG. 8, 801 represents a camera device gantry, 802 represents a camera device, 803 represents a projector (two-dimensional light supplementation device), 804 represents a shadowless light, 805 represents annular light (three-dimensional light supplementation device), and 806 represents a shadowless light holder. Moreover, in FIG. 8, the accuracy for inspection of sealing nails is 0.006 mm, a single 3D structured light camera is used, vertically mounted with vertical and horizontal adjustability, ensuring that within an inspectable field of view with an object distance of 116±12.5 mm, the camera can be adjusted through a lifting apparatus. A scheme is configured based on the compatibility of a product under inspection, and an acquisition distance of the camera can be adjusted with one click for clear imaging. Moreover, the increased range of light source mounting angles and the ability to move the camera vertically and horizontally provide greater adaptability and easier adjustment, thus enabling compatibility with a wider range of products.

Based on the same inventive concept, an embodiment of this application further provides a defect inspection method for implementing the defect inspection system described above. The problem-solving implementation solution provided by this method is similar to the implementation solution described in the foregoing system. Therefore, for specific limitations in one or more embodiments of the defect inspection method provided below, reference may be made to the limitations on the defect inspection system in the previous description, and details are not repeated herein.

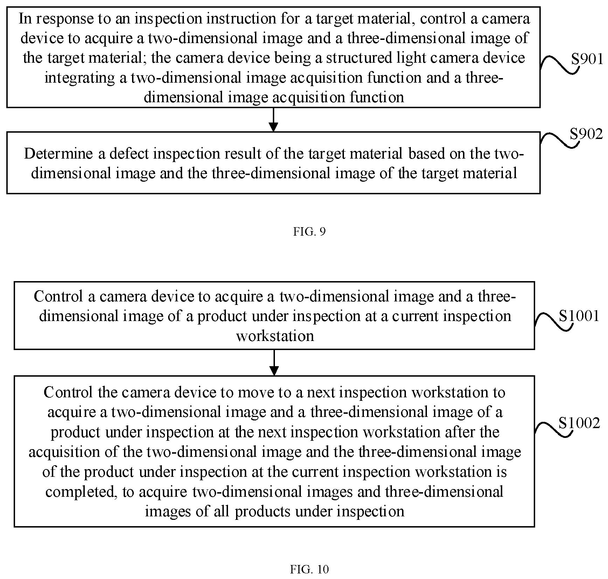

In one embodiment, a defect inspection method is provided. With the application of the method to the defect inspection system in FIG. 1 as an example, this embodiment relates to a specific process of an inspection device controlling a camera device to acquire a two-dimensional image and a three-dimensional image of a target material in response to an inspection instruction for the target material and determining a defect inspection result of the target material based on the two-dimensional image and the three-dimensional image of the target material. As shown in FIG. 9, this embodiment includes the steps below.

S901. In response to an inspection instruction for a target material, control a camera device to acquire a two-dimensional image and a three-dimensional image of the target material; the camera device being a structured light camera device integrating a two-dimensional image acquisition function and a three-dimensional image acquisition function.

When the control device receives the inspection instruction for the target material, the control device controls the camera device to acquire the two-dimensional image and the three-dimensional image of the target material.

Specifically, when the control device receives the inspection instruction for the target material, the control device generates an acquisition instruction for the camera device and sends the acquisition instruction to the camera device. After receiving the acquisition instruction, the camera device acquires the two-dimensional image and the three-dimensional image of the target material.

In some embodiments, a manner of acquiring the two-dimensional image and the three-dimensional image of the target material by the camera device may be to first acquire a two-dimensional image and acquire a three-dimensional image after the two-dimensional image acquisition is completed; or first acquire a three-dimensional image and acquire a two-dimensional image after the three-dimensional image acquisition is completed; or simultaneously acquire a two-dimensional image and a three-dimensional image.

Furthermore, to prevent contamination of the camera device from the external environment, such as dust on the lens of the camera device, in some embodiments of this application, a protective cover is added to the exterior of the camera device to prevent contamination of the camera device from the external environment, and the protective cover may also protect against eye damage from emitted laser light.

The protective cover may be fitted onto the lens of the camera device. The protective cover may be made of various materials such as metal, hard plastic, or soft rubber and may come in various shapes, including cylindrical, petal-shaped, or square.

S902. Determine a defect inspection result of the target material based on the two-dimensional image and the three-dimensional image of the target material.

After acquiring the two-dimensional image and the three-dimensional image of the target material, the camera device can send the two-dimensional image and the three-dimensional image of the target material to the control device. The control device inspects the two-dimensional image and the three-dimensional image of the target material and determines a defect inspection result of the target material.

Specifically, simultaneous inspection on the two-dimensional image and the three-dimensional image can be performed to obtain a two-dimensional inspection result corresponding to the two-dimensional image and a three-dimensional inspection result corresponding to the three-dimensional image. Based on the two-dimensional inspection result and the three-dimensional inspection result, the defect inspection result of the target material is determined. The two-dimensional inspection result and the three-dimensional inspection result can be directly determined as the defect inspection result of the target material.

In one embodiment, the two-dimensional image and the three-dimensional image of the target material may be inspected through a preset neural network model. Specifically, the two-dimensional image and the three-dimensional image are used as inputs to the neural network model, and an inspection result of the target material is directly output through the analysis of the neural network model.

In another embodiment, the two-dimensional image and the three-dimensional image may be inspected separately through a preset two-dimensional inspection model and a three-dimensional inspection model. Specifically, the two-dimensional image is used as an input to the two-dimensional inspection model, and the two-dimensional inspection model analyzes the two-dimensional image to determine a two-dimensional inspection result corresponding to the two-dimensional image; and the three-dimensional image is used as an input to the three-dimensional inspection model, and the three-dimensional inspection model analyzes the three-dimensional image to determine a three-dimensional inspection result corresponding to the three-dimensional image.

In the foregoing defect inspection method, in response to the inspection instruction for the target material, the camera device is controlled to acquire the two-dimensional image and the three-dimensional image of the target material, and the defect inspection result of the target material is determined based on the two-dimensional image and the three-dimensional image of the target material. In this method, because the camera device is a structured light camera device integrating a two-dimensional image acquisition function and a three-dimensional image acquisition function, in the process of acquiring the two-dimensional image and the three-dimensional image, the two-dimensional image and the three-dimensional image can be acquired without the need of switching camera devices, ensuring the convenience of image acquisition and thereby improving the convenience of defect inspection of the target material. Moreover, the use of the same camera device to acquire the two-dimensional image and the three-dimensional image ensures that the two-dimensional image and the three-dimensional image that are acquired are in the same coordinate system. Therefore, in defect inspection using the two-dimensional image and the three-dimensional image, preprocessing on the two images needs not too many complicated data unification operations, thereby improving the efficiency of defect inspection of the target material. In addition, the two-dimensional image and the three-dimensional image of the target material in two different dimensions are used for defect inspection of the target material, and such multi-dimensional information basis ensures the comprehensiveness of defect inspection of the target material, avoids the problem of erroneous determination due to single image inspection with the two-dimensional image or the three-dimensional image, and improves the accuracy of the defect inspection.

In actual applications, a target material may refer to a material including a plurality of products under inspection, in which case each product under inspection is at a different inspection workstation. Based on this, the following provides embodiments to describe in detail a process of how a camera device is controlled to acquire a two-dimensional image and a three-dimensional image of each product under inspection in the target material at different inspection workstations in the embodiments of this application in this case. In one embodiment, as shown in FIG. 10, the process of controlling a camera device to acquire a two-dimensional image and a three-dimensional image of a target material includes the steps below:

S1001. Control the camera device to acquire a two-dimensional image and a three-dimensional image of a product under inspection at a current inspection workstation; and

S 1002. Control the camera device to move to a next inspection workstation to acquire a two-dimensional image and a three-dimensional image of a product under inspection at the next inspection workstation after the acquisition of the two-dimensional image and the three-dimensional image of the product under inspection at the current inspection workstation is completed, to acquire two-dimensional images and three-dimensional images of all products under inspection.

Continuing with the scenario of products under inspection as battery cells welded after second electrolyte injection as an example, a sealing nail welding machine may be used to weld a plurality of battery cells side by side. After welding, the plurality of battery cells after welding of the sealing nails are placed in a tooling fixture of a rotary table. An upper-level computer controls the plurality of battery cells after welding to move to inspection workstations, with one battery cell corresponding to one inspection workstation. One tooling fixture may correspond to one battery cell, or one tooling fixture may correspond to a plurality of battery cells.

After moving the plurality of battery cells to their respective inspection workstations, the upper-level computer sends an inspection instruction to the control device. The control device controls the camera device to acquire two-dimensional images and three-dimensional images of the battery cells based on the inspection instruction. Taking a scenario with four battery cells as an example, the camera device can sequentially acquire images of the products under inspection in the inspection workstations. Specifically, a first inspection workstation is taken as a current inspection workstation, a two-dimensional image and a three-dimensional image of a battery cell in the first inspection workstation are first acquired. After the acquisition of the two-dimensional image and the three-dimensional image of the battery cell in the first inspection workstation is completed, the control device controls the camera device to move to a second inspection workstation, and the camera device acquires a two-dimensional image and a three-dimensional image of a battery cell in the second inspection workstation, until the camera device has acquired two-dimensional images and three-dimensional images of the battery cells in all inspection workstations. The control device and the upper-level computer may communicate through a network.

After completing the acquisition of the two-dimensional image and the three-dimensional image of the product under inspection at the current inspection workstation, the camera device sends an image acquisition complete signal to the control device. The control device generates a control instruction based on the image acquisition complete signal and sends the control instruction to the camera device, controlling the camera device to move to a next inspection workstation through a lifting apparatus and acquire a two-dimensional image and a three-dimensional image of a product under inspection in the next inspection workstation, to acquire two-dimensional images and three-dimensional images of all products under inspection in all inspection workstations.

It should be noted that a single camera device is used in this application. In consideration of size variation of products under inspection, the camera device is mounted on a lifting apparatus that can move vertically and horizontally.

In some embodiments, a sequence in which the camera device acquires images of the products under inspection at each inspection workstation may be preset, and it may be a sequential acquisition of the products under inspection at the inspection workstations or may be an inspection sequence determined according to a specific rule.

In one embodiment, the camera device is a 3D structured light camera. The 3D structured light camera has higher camera precision, and has a larger projection dimension with its use of phase-shifting structured light technology, ensuring that the camera can capture more material information, greatly improving imaging speed and image quality. Moreover, the 3D structured light camera is compatible with a variety of welding process products using 3D structured light, ensuring compatibility in defect inspection of different materials.

In the foregoing defect inspection method, the camera device is controlled to acquire the two-dimensional image and the three-dimensional image of the product under inspection at the current inspection workstation. After the acquisition of the two-dimensional image and the three-dimensional image of the product under inspection at the current inspection workstation is completed, the camera device is controlled to move to a next inspection workstation to acquire a two-dimensional image and a three-dimensional image of a product under inspection at the next inspection workstation, to acquire two-dimensional images and three-dimensional images of all products under inspection. In this method, the acquisition of images of a plurality of products under inspection can be implemented by moving the camera device, ensuring the convenience of defect inspection of the target material. Furthermore, in image acquisition after the movement of the camera device, each product under inspection is within a view of field of the camera device, which also improve the accuracy of the defect inspection of the target material.

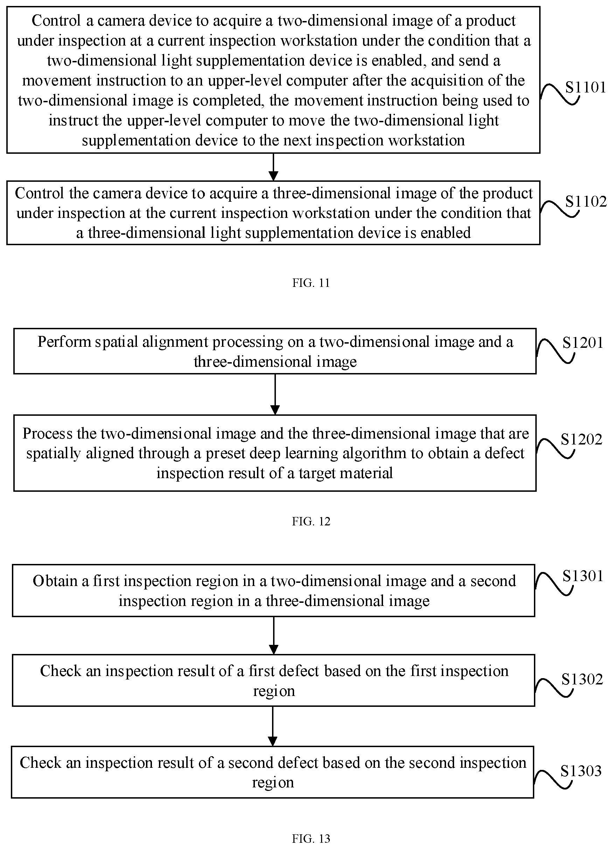

The following provides specific description of how to control the camera device to acquire the two-dimensional image and three-dimensional image of the product under inspection at the current inspection workstation through an embodiment. In one embodiment, as shown in FIG. 11, the controlling a camera device to acquire a two-dimensional image and a three-dimensional image of a product under inspection at a current inspection workstation includes the steps below:

S1101. Control a camera device to acquire a two-dimensional image of a product under inspection at a current inspection workstation under the condition that a two-dimensional light supplementation device is turned on, and send a movement instruction to an upper-level computer after the acquisition of the two-dimensional image is completed, the movement instruction being used to instruct the upper-level computer to move the two-dimensional light supplementation device to the next inspection workstation; and

S1102. Control the camera device to acquire a three-dimensional image of the product under inspection at the current inspection workstation under the condition that a three-dimensional light supplementation device is turned on.

After the control device receives the inspection instruction for the target material, the control device first sends a trigger signal to the two-dimensional light supplementation device and the three-dimensional light supplementation device to enable the two-dimensional light supplementation device and the three-dimensional light supplementation device. The control device controls the camera device to acquire a two-dimensional image of a product under inspection at the current inspection workstation under the condition that the two-dimensional light supplementation device is turned on.

In some embodiments, the trigger signal received by the two-dimensional light supplementation device and the three-dimensional light supplementation device may alternatively be sent by the upper-level computer. Specifically, when sending an inspection instruction to the control device, the upper-level computer may also simultaneously send a trigger signal to the two-dimensional light supplementation device and the three-dimensional light supplementation device to control the two-dimensional light supplementation device and the three-dimensional light supplementation device to turn on.

After the acquisition of the two-dimensional image of the product under inspection at the current inspection workstation is completed, the camera device sends a movement instruction to the upper-level computer to instruct the upper-level computer to move the two-dimensional light supplementation device to a next inspection workstation. Specifically, after receiving the movement instruction, the upper-level computer sends a movement signal to the two-dimensional light supplementation device according to the movement instruction, so that the two-dimensional light supplementation device moves to the next inspection workstation according to the movement signal.

Then, the control device controls the camera device to acquire a three-dimensional image of the product under inspection at the current inspection workstation under the condition that a three-dimensional light supplementation device is turned on.

One two-dimensional light supplementation device may be included, and the two-dimensional light supplementation device is mounted in a sliding assembly to move the two-dimensional light supplementation device in different directions, allowing the camera device to acquire the two-dimensional images at each inspection workstation through the two-dimensional light supplementation device.

A plurality of three-dimensional light supplementation device may be included, with one three-dimensional light supplementation device corresponding to each inspection workstation; and the three-dimensional light supplementation device may be an annular light.

In the foregoing defect inspection method, the camera device is controlled to acquire the two-dimensional image of the product under inspection at the current inspection workstation under the condition that the two-dimensional light supplementation device is turned on; after the acquisition of the two-dimensional image is completed, the movement instruction is sent to the upper-level computer to instruct the upper-level computer to move the two-dimensional light supplementation device to the next inspection workstation; and the camera device is controlled to acquire the three-dimensional image of the product under inspection at the current inspection workstation under the condition that the three-dimensional light supplementation device is turned on. In this method, the two-dimensional light supplementation device is used to supplement light when acquiring the two-dimensional image, and the three-dimensional light supplementation device is used to supplement light when acquiring the three-dimensional image, ensuring that the lighting conditions are optimal when acquiring the two-dimensional images and the three-dimensional images, thereby improving the clarity and information comprehensiveness of the two-dimensional image and the three-dimensional image of the product under inspection that are acquired, achieving the effect of high-precision full-edge imaging of the product under inspection, and ensuring the accuracy of subsequent defect inspection.

Based on the response to the inspection instruction for the target material in the foregoing embodiments, the following provides description of sending conditions of the inspection instruction through an embodiment. In one embodiment, the inspection instruction for the target material is sent by the upper-level computer after detecting that the target material has entered the inspection workstation and controlling a press-fitting apparatus to perform a downward pressing operation on the target material; where a coverage area of the press-fitting apparatus is greater than or equal to a top surface area of the target material.

When detecting that the target material has entered the inspection workstation, the upper-level computer controls the press-fitting apparatus to perform a downward pressing operation on the target material. After the downward pressing operation is completed, the upper-level computer generates an inspection instruction for the target material and sends the inspection instruction to the inspection device.

After completing the downward pressing operation on the target material, the press-fitting apparatus may feed back a downward pressing success signal to the upper-level computer. The upper-level computer, in response to the downward pressing success signal, generates an inspection instruction and sends the inspection instruction to the control device, enabling the control device to perform defect inspection on the target material.

In the foregoing defect inspection method, the press-fitting apparatus is used to downwardly press the target material. For the target material, especially a material including a plurality of products under inspection, the height of all products under inspection in the target material can be unified to ensure that all products under inspection are at the same level, avoiding loss of pixels in the image due to camera depth of field.

The foregoing embodiment describes how to acquire the two-dimensional image and the three-dimensional image of the target material. The following provides description of how to perform defect inspection analysis based on the two-dimensional image and the three-dimensional image of the target material through an embodiment. In one embodiment, as shown in FIG. 12, the determining a defect inspection result of the target material based on the two-dimensional image and the three-dimensional image of the target material includes the steps below.

S 120 1. Perform spatial alignment processing on a two-dimensional image and a three-dimensional image.

Before the defect inspection on the two-dimensional image and the three-dimensional image, spatial alignment processing is generally performed on the two-dimensional image and the three-dimensional image to reduce time computational complexity and improve computational efficiency, that is, unifying the two-dimensional image and the three-dimensional image in the same coordinate system.

Description is made using an example in which the camera device is a 3D structured light camera. Before acquiring images, the 3D structured light camera undergoes internal calibration to obtain an intrinsic parameter matrix, a rotation matrix, a translation matrix, a homography matrix, and the like of the 3D structured light camera. Therefore, the homography matrix of the 3D structured light camera may be directly used for spatial alignment of the two-dimensional image and the three-dimensional image.

In another embodiment, a manner of spatially aligning the two-dimensional image and the three-dimensional image may alternatively be to use the intrinsic parameter matrix, rotation matrix, and translation matrix of the camera device to achieve the spatial alignment of the two-dimensional image and the three-dimensional image. For example, taking the alignment of the two-dimensional image to the three-dimensional image as an example, equation (1) is used to achieve the spatial alignment of the two-dimensional image to the three-dimensional image.

$$s \begin{bmatrix} u \\ v \\ 1 \end{bmatrix} = KRT \begin{bmatrix} x \\ y \\ z \\ 1 \end{bmatrix} \quad (1)$$

where the coordinates of the two-dimensional image are (u, v), the coordinates corresponding to the points of this image under the coordinate system with the two-dimensional image as the origin are (x, y, z), K, R, and T denote the intrinsic parameter matrix, rotation matrix, and translation matrix of the camera device, respectively, and $s = z$, representing a scale.

In yet another embodiment, a manner of spatially aligning the two-dimensional image and the three-dimensional image may alternatively be to use a preset spatial alignment model, where the two-dimensional image and the three-dimensional images are used as inputs to the spatial alignment model, and analysis is performed on the two-dimensional image and the three-dimensional image using the spatial alignment model to obtain a two-dimensional image and a three-dimensional image that are spatially aligned.

In the defect inspection methods of the prior art, a combination of a two-dimensional camera and a three-dimensional line scan camera is used. Since the two-dimensional camera and the three-dimensional line scan camera are two different cameras, the two-dimensional image and the three-dimensional image that are acquired are not in the same spatial position. Therefore, in aligning the two-dimensional image and the three-dimensional image in the prior art, built-in parameters of the two-dimensional camera and the three-dimensional line scan camera need to be considered, and the alignment algorithm has high requirements and complexity. However, in this application, the two-dimensional image and the three-dimensional image that are acquired by the 3D structured light camera are in the same spatial position. In aligning these images, only calibration parameters of the 3D structured light camera need to be considered, so only a relatively simple alignment algorithm is required to implement the alignment of the two-dimensional image and the three-dimensional image.

S1202. Process the two-dimensional image and the three-dimensional image that are spatially aligned through a preset deep learning algorithm to obtain a defect inspection result of the target material.

A deep learning model may be constructed according to the preset deep learning algorithm, and the two-dimensional image and the three-dimensional image may be directly input to the deep learning model to obtain the defect inspection result of the target material.

It should be noted that the deep learning algorithm in this embodiment may include but is not limited to convolution neural networks, recurrent neural networks, generative adversarial networks, and deep reinforcement learning.

In the foregoing defect inspection method, the two-dimensional image and the three-dimensional image are spatially aligned, and then the two-dimensional image and the three-dimensional image that are spatially aligned are processed through the preset deep learning algorithm to obtain the defect inspection result of the target material. In this method, the two-dimensional image and the three-dimensional image are spatially aligned firstly, improving the simplicity and convenience of subsequent defect inspection on the two-dimensional image and the three-dimensional image that are spatially aligned and reducing the computational complexity. Moreover, because the two-dimensional image and the three-dimensional image are acquired using the same camera device, and the spatial alignment processing on them needs not too many complicated algorithms, so that the time required for spatial alignment processing on the two-dimensional image and the three-dimensional image can be reduced, and the efficiency of the spatial processing can be improved, thereby improving the efficiency of the whole defect inspection process.

Taking a scenario of battery after second electrolyte injection in a power battery system as an example, defects such as unwelded, broken weld, improper weld height, and blowhole may be found in the battery cells welded. Based on these defects, the defects of the battery cells can be divided into defects with height information and defects without height information. Therefore, the defects of the target material can be further divided into defects with height information and defects without height information. The defects without height information are determined as first defects, and the defects with height information are determined as second defects. Then, the defect inspection result includes an inspection result of the first defects and an inspection result of the second defects. The following provides detailed description of how to determine an inspection result of the first defects and an inspection result of the second defects through an embodiment. In one embodiment, as shown in FIG. 13, the processing the two-dimensional image and the three-dimensional image that are spatially aligned through a preset deep learning algorithm to obtain a defect inspection result of the target material includes the steps below.

S1301. Obtain a first inspection region in a two-dimensional image and a second inspection region in a three-dimensional image.

The two-dimensional image and the three-dimensional image that are acquired include a plurality of pixels, but not all pixels are equally important. Some pixels are of no value to the inspection result, and some pixels may affect the inspection result. Therefore, it is quite essential to extract critical regions in the image and discard regions that are of no value and affect the inspection result. This can reduce the data volume and improve processing speed, and in addition, removing redundant regions is conducive to obtaining more accurate inspection results.

To improve inspection efficiency and accuracy, a region of interest (Region of Interest, ROI) in the image can be extracted before the image is inspected. The extraction of the ROI means selecting an image region from the image, which region is the focus of image inspection. The region may be in the form of a rectangle, circle, ellipse, irregular polygon, or the like.

Therefore, before performing defect inspection on the two-dimensional image and the three-dimensional image, a first inspection region of the two-dimensional image and a second inspection region of the three-dimensional image may be extracted. The first inspection region and the second inspection region may be the regions of interest in the two-dimensional image and the three-dimensional image.

The first inspection region of the two-dimensional image may be obtained through a region inspection model. Specifically, the two-dimensional image is separately input into the region inspection model, which ultimately outputs the first inspection region of the two-dimensional image.

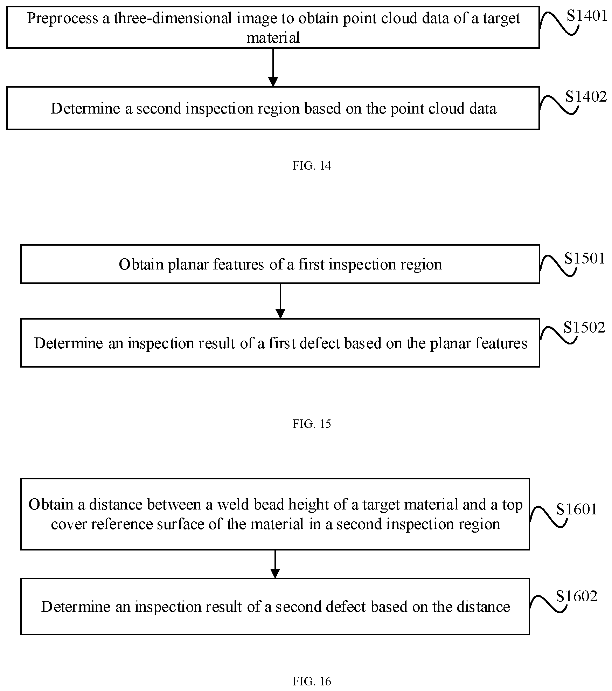

In one embodiment, as shown in FIG. 14, a specific process of obtaining a second inspection region in the three-dimensional image may include the steps below.

S1401. Preprocess a three-dimensional image to obtain point cloud data of a target material.

A manner of obtaining the point cloud data of the target material based on the three-dimensional image may be to perform coordinate transformation calculations on the three-dimensional image to obtain the point cloud data. Specifically, the conversion from the three-dimensional image to the point cloud data may be performed according to equation (2):

$$
\begin{bmatrix} x \\ y \\ z \end{bmatrix} = D \begin{bmatrix} \dfrac{1}{f_x} & 0 & 0 \\ 0 & \dfrac{1}{f_y} & 0 \\ 0 & 0 & 1 \end{bmatrix} \begin{bmatrix} x' \\ y' \\ 1 \end{bmatrix} \tag{2}
$$

where x, y, and z are point cloud coordinates, *x' and y'* are image coordinates, and D is the depth value.

Point cloud data often contains a large number of hashed points and isolated points. Therefore, after the point cloud data of the target material is obtained, a point cloud filtering method may be used to perform point cloud filtering processing on the point cloud data, that is, to filter out the noise in the point cloud data.

S 1402. Determine a second inspection region based on the point cloud data.

The second inspection region of the point cloud data may be determined using a feature extraction method. For example, the second inspection region of the point cloud data is extracted by extracting geometric features of the point cloud data and using distribution of the geometric features and a particle filtering framework. The second inspection region may also be obtained using a three-dimensional point cloud keypoint extraction algorithm.

In this embodiment, the point cloud data of the target material is obtained by preprocessing the three-dimensional image, and the second inspection region is determined based on the point cloud data. In this method, the second inspection region is determined based on the point cloud data corresponding to the three-dimensional image of the target material, improving the accuracy of extracting the second inspection region.

S 1302. Check an inspection result of a first defect based on the first inspection region.

The first inspection region is obtained based on the two-dimensional image, and the two-dimensional image is a two-dimensional planar image. Therefore, the first inspection region may be used to inspect defects without height information; for example, the first defect may be a defect such as unwelded, broken weld, and no sealing nail. Therefore, the inspection result of the first defect may be directly determined based on a visual appearance of the first inspection region.

In one embodiment, as shown in FIG. 15, the checking an inspection result of a first defect based on the first inspection region includes the steps below.

S1501. Obtain planar features of the first inspection region.

The planar features of the image mainly include color features, texture features, and shape features.

Color histograms are generally used to represent color features. An advantage of color histograms is that they are invariant to image rotation and translation, and moreover, with normalization, they are also invariant to image scaling. Color histograms are particularly suitable for the description of images that are difficult to segment automatically and images for which spatial positions of objects are not a concern.

Texture features are global features that describe surface properties of a scene corresponding to an image or image region.

There are two types of representation methods for shape features, one is contour features and the other is regional features. Contour features of an image are mainly concerned with outer boundaries of objects, while regional features of the image are related to the entire shape region.

Therefore, one or more of the color histogram, texture features, and contour features of the first inspection region may be extracted as the planar features of the first inspection region.

S 1502. Determine an inspection result of a first defect based on the planar features.

Based on the planar features obtained, the inspection result of the first defect may be determined. Specifically, the inspection result of the first defect may be determined using the observation method.

Therefore, still referring to FIG. 9 (c), if it is the contour features of the first inspection region that are obtained, the inspection result of the first defect corresponding to the first inspection region can be directly determined as the product under inspection corresponding to the first inspection region having a broken weld. If the first inspection region refers to FIG. 9(b), and if it is the contour features of the first inspection region that are obtained, the inspection result of the first defect corresponding to the first inspection region can be directly determined as the product under inspection in the first inspection region having no defects.

In addition, the planar features in the foregoing embodiment can be input into an inspection algorithm to determine the inspection result of the first defect in the inspection algorithm.

In the foregoing defect inspection method, the planar features of the first inspection region are obtained, and the inspection result of the first defect is determined based on the planar features. In this method, the planar features of the first inspection region are obtained, and the determination of a defect without height information is made based on the planar features, improving the accuracy of the defect inspection.

S 1303. Check an inspection result of a second defect based on the second inspection region.

The second inspection region is obtained based on the three-dimensional image, and the three-dimensional image is a depth image. Therefore, the second inspection region may be used to inspect defects with height information. Thus, the second defect may be a defect with height information such as improper weld height, step inspection, or blowhole.

The second inspection region may be inspected based on a deep learning algorithm to determine the inspection result of the second defect. Basic models in the deep learning algorithm include but are not limited to the multilayer perceptron models, deep neural network models, and recurrent neural network models. Their representatives are the DBN (Deep belief network) deep belief networks, CNN (Convolution Neural Networks) convolution neural networks, and RNN (Recurrent neural network) recurrent neural networks, respectively.

In one embodiment, a specific manner of obtaining the inspection result of the second defect is also provided. As shown in FIG. 16, the checking an inspection result of a second defect based on the second inspection region includes the steps below.

S1601. Obtain a distance between a weld bead height of a target material and a top cover reference surface of the material in a second inspection region.

The second inspection region can reflect the height information of the product under inspection, so the distance between the weld bead height of the target material and the top cover reference surface of the material in the second inspection region can be obtained, and the defect information of the product under inspection corresponding to the second inspection region can be determined based on the distance.

A manner of obtaining the distance may be to input the second inspection region into a distance acquisition network. By analyzing the second inspection region through the distance acquisition network, the distance between the weld bead height of the target material and the top cover reference surface of the material in the second inspection region can be obtained.

S 1602. Determine an inspection result of a second defect based on the distance.

In one embodiment, the inspection result of the second defect is determined based on the distance between the weld bead height of the target material and the top cover reference surface of the material. In other words, the defect category of the product under inspection is determined based on the distance, that is, obtaining the inspection result of the second defect. For example, if the distance is within a first preset range, the inspection result of the second defect may be determined as poor weld height; or if the distance is within a second preset range, the inspection result of the second defect may be determined as a blowhole, or the like.

In another embodiment, if the distance between the weld bead height of the target material and the top cover reference surface of the material is less than a preset threshold, the corresponding product under inspection is determined to be qualified; or otherwise, the corresponding product under inspection is determined to be unqualified.

Then, a deep learning algorithm can further be used to identify and inspect the unqualified product to determine the defect type of the product under inspection.

In this embodiment, the distance between the weld bead height of the target material and the top cover reference surface of the material in the second inspection region is obtained, and the inspection result of the second defect is determined based on the distance. In this method, the inspection result of the defect with height information in the target material can be determined based on the distance, ensuring the accuracy of the defect inspection.

In the foregoing defect inspection method, the first inspection region in the two-dimensional image and the second inspection region in the three-dimensional image are obtained, the inspection result of the first defect is checked based on the first inspection region, and the inspection result of the second defect is checked based on the second inspection region. In this method, by obtaining the inspection regions in the two-dimensional image and the three-dimensional image, the key inspection regions in the images are extracted, avoiding a large amount of background redundant information and improving the accuracy of the inspection result of the first defect and the inspection result of the second defect.

After the defect inspection result of the target material is obtained, the defect inspection result may be further displayed. In one embodiment, this embodiment includes: sending the defect inspection result of the target material to an upper-level computer; and/or displaying the defect inspection result of the target material on a front-end interface.

After obtaining the defect inspection result of the target material, the control device may also display the defect inspection result of the target material on the front-end interface of a visual software of the control device, allowing monitoring personnel to intuitively determine defect information of the target material.

In some embodiments, after determining the defect inspection result of the target material, the control device may send the defect inspection result of the target material to the upper-level computer. The upper-level computer may determine whether to release the target material based on the defect inspection result, allowing the target material to flow to a next processing stage.

In the foregoing defect inspection method, sending the defect inspection result of the target material to the upper-level computer may allow the upper-level computer to accurately obtain the defect inspection result in a timely manner; and displaying the defect inspection result of the target material on a front-end interface can make it more intuitive to know the defect information of the target material.

In one embodiment, a defect inspection method is further provided and described using an example in which a product under inspection are battery cells after welding of sealing nails, four battery cells are provided, a camera device is a 3D structured light camera, a two-dimensional light supplementation device is a two-dimensional light source, a three-dimensional light supplementation device is a three-dimensional light source, an upper-level computer is a PLC, and a control device is a personal computer (Personal Computer, PC).

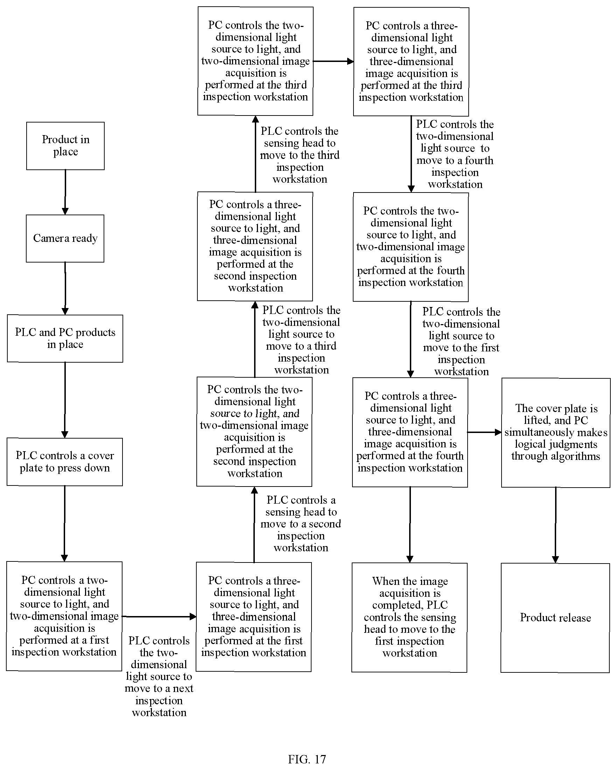

As shown in FIG. 17, FIG. 17 is a flowchart of a battery cell inspection process. In a sealing nail welding machine, after four battery cells are welded side by side, the battery cells after welding of the sealing nails are placed in a tooling fixture of a rotary table. A PLC controls the battery cells after welding of the sealing nails to move to inspection workstations with the fixture. After the battery cells move to their initial positions in the inspection workstations, the PLC controls the cover plate to press down to ensure that the top covers of the four battery cells are at the same height. Then, the PLC communicates with a PC over a network. The PLC sends signals that the battery cells reach the inspection workstations to the PC, respectively, the PC controls a two-dimensional light source and a three-dimensional light source to light, and then the PC controls a 3D structured light camera to take a picture in two-dimension mode at a first inspection workstation. When the picture taking in the two-dimension mode is completed, the 3D structured light camera sends a two-dimensional image acquisition complete signal to the PLC. After receiving the two-dimensional image acquisition complete signal, the PLC sends a control instruction to the two-dimensional light source to move the two-dimensional light source to a second inspection workstation. The PC controls the 3D structured light camera to acquire an image in three-dimension mode. After the image acquisition in the three-dimension mode is completed, the 3D structured light camera sends a three-dimensional image acquisition complete signal to the PLC, and the PLC controls the 3D structured light camera to move to the second inspection workstation.

Similarly, based on the manner of acquiring the two-dimensional image and the three-dimensional image of the battery cell at the first inspection workstation, two-dimensional images and three-dimensional images are acquired for the second inspection workstation, third inspection workstation, and fourth inspection workstation, until the image acquisition of all battery cells is completed. The PLC controls the two-dimensional light source and the 3D structured light camera to return to their original positions.

The 3D structured light camera sends the two-dimensional images and the three-dimensional images that are acquired to the PC. The visual software system in the PC obtains the two-dimensional images and the three-dimensional images and invokes an artificial intelligence (Artificial intelligence, AI) algorithm to preprocess the two-dimensional images and the three-dimensional images, determine inspection regions of the two-dimensional images and the three-dimensional images, calculate the flatness and step height in the inspection regions of the two-dimensional images and the three-dimensional images, respectively, then obtain inspection results based on the flatness and step height calculated, and upload the inspection results to the PLC through a transmission control protocol (Transmission Control Protocol, TCP). The PLC then feeds back the inspection results to a manufacturing execution system (manufacturing execution system, MES).

It should be noted that if there are a plurality of battery cells, the two-dimensional image and the three-dimensional image of each battery cell are obtained, and the two-dimensional image and the three-dimensional image of each battery cell are inspected separately. The obtained inspection results correspond to the inspection results of each individual battery cell. The sensing head in FIG. 17 is the 3D structured light camera.

The AI algorithm includes but is not limited to decision trees, random forest algorithms, logistic regression, naive Bayes, K-nearest neighbors algorithms, K-means algorithms, neural networks, and Markov algorithms.

Specifically, to improve inspection efficiency and inspection yield, deep learning and point cloud inspection algorithms are used for defect determination. First, spatial alignment processing is performed on the three-dimensional image and the two-dimensional image acquired by the 3D structured light camera. The three-dimensional image and the two-dimensional image that are spatially aligned are transmitted to the AI algorithm for defect identification and inspection. The three-dimensional image is processed by the AI algorithm and converted into point cloud data. Then, ROI positioning is performed on the three-dimensional image based on the point cloud data, and ROI positioning is performed on the two-dimensional image to obtain a three-dimensional inspection region corresponding to the three-dimensional image and a two-dimensional inspection region corresponding to the two-dimensional image. Then, defect inspection and determination are performed on the three-dimensional inspection region and the two-dimensional inspection region.

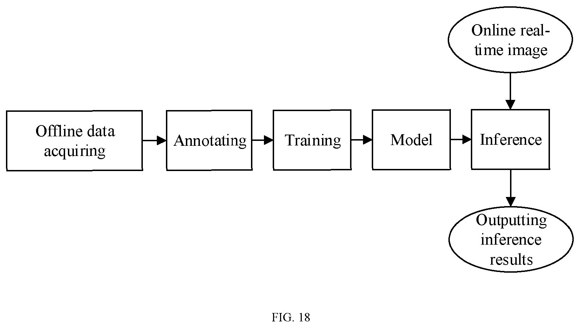

As shown in FIG. 18, FIG. 18 is a process of using an artificial intelligence algorithm, including an image acquiring module, an image preprocessing module, and an algorithm inspecting and determining module, where the preprocessing module includes annotating training images.

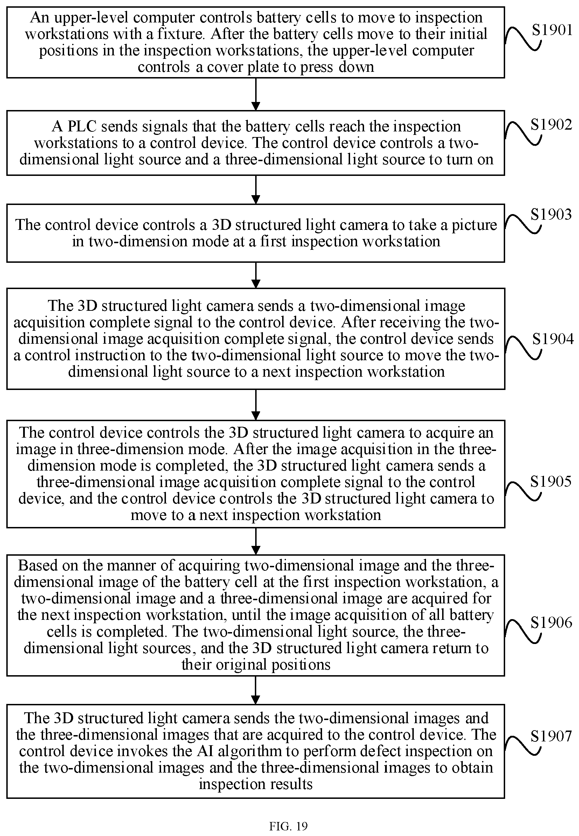

In one embodiment, as shown in FIG. 19, taking the product under inspection as a battery cell after welding of the sealing nails and using a 3D structured light camera as the camera device as an example, this embodiment includes the steps below:

S1901. An upper-level computer controls battery cells to move to inspection workstations with a fixture. After the battery cells move to their initial positions in the inspection workstations, the upper-level computer controls a cover plate to press down;
S1902. A PLC sends signals that the battery cells reach the inspection workstations to a control device.

The control device controls a two-dimensional light source and a three-dimensional light source to turn on;
S1903. The control device controls a 3D structured light camera to take a picture in two-dimension mode at a first inspection workstation;
S1904. The 3D structured light camera sends a two-dimensional image acquisition complete signal to the control device. After receiving the two-dimensional image acquisition complete signal, the control device sends a control instruction to the two-dimensional light source to move the two-dimensional light source to a next inspection workstation;
S1905. The control device controls the 3D structured light camera to acquire an image in three-dimension mode. After the image acquisition in the three-dimension mode is completed, the 3D structured light camera sends a three-dimensional image acquisition complete signal to the control device, and the control device controls the 3D structured light camera to move to a next inspection workstation;
S1906. Based on the manner of acquiring two-dimensional image and the three-dimensional image of the battery cell at the first inspection workstation, a two-dimensional image and a three-dimensional image are acquired for the next inspection workstation, until the image acquisition of all battery cells is completed. The two-dimensional light source, the three-dimensional light sources, and the 3D structured light camera return to their original positions; and
S1907. The 3D structured light camera sends the two-dimensional images and the three-dimensional images that are acquired to the control device. The control device invokes the AI algorithm to perform defect inspection on the two-dimensional images and the three-dimensional images to obtain inspection results.

Specifically, the 3D structured light camera sends the two-dimensional images and the three-dimensional images that are acquired to the control device. A visual software system in the control device obtains the two-dimensional images and the three-dimensional images and invokes the AI algorithm to preprocess the two-dimensional images and the three-dimensional images, determine the inspection regions of the two-dimensional images and the three-dimensional images, calculate the flatness and step height in the inspection regions of the two-dimensional image and the three-dimensional image, respectively, then obtain inspection results based on the flatness and step height calculated, and upload the inspection results to the PLC and the upper-level computer through a TCP protocol. The upper-level computer then feeds back the inspection results to a manufacturing execution system.

For specific limitations on the defect inspection method provided in this embodiment, reference may be made to the limitations on the steps of the embodiments in the defect inspection method in the previous description, and details are not repeated herein.

It should be understood that although the steps of the flowcharts attached to the foregoing embodiments are shown sequentially as indicated by the arrows, these steps are not necessarily executed sequentially in the order indicated by the arrows. Unless otherwise specified explicitly, execution of these steps is not limited to a strict order, and the steps may be executed in other orders. Moreover, at least some of the steps of the flowchart attached to the foregoing embodiments may include multiple steps or multiple stages. These steps or stages are not necessarily executed at a same time but may be executed at different times, and these steps or stages are not necessarily executed in a sequential order either but may be executed in a sequential or alternating manner with at least some of other steps or steps or stages in other steps.

Based on the same inventive concept, an embodiment of this application further provides a defect inspection apparatus for implementing the foregoing defect inspection method. The problem-solving implementation solution provided by this apparatus is similar to the implementation solution described in the foregoing method. Therefore, for specific limitations in one or more embodiments of the defect inspection apparatus provided below, reference may be made to the limitations on the defect inspection method in the previous description. Details are not repeated herein.

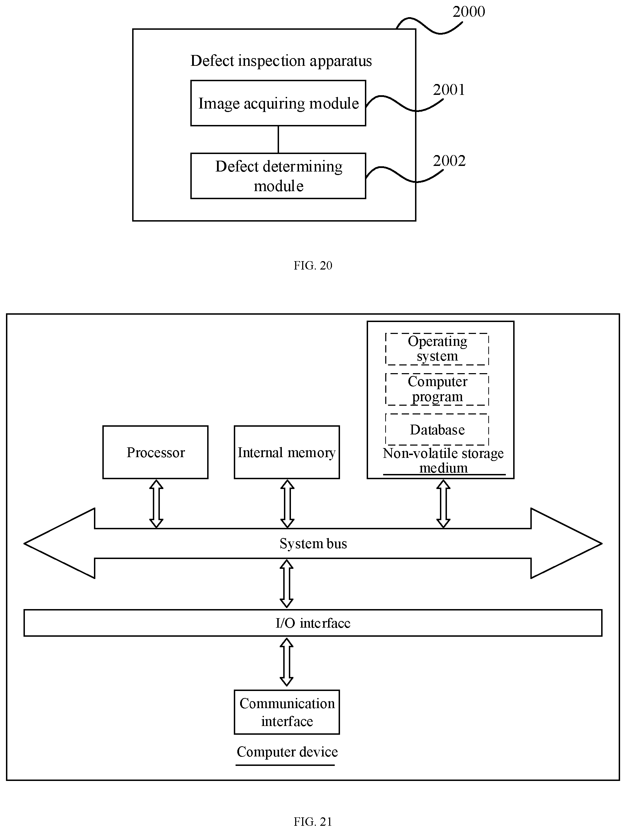

In one embodiment, as shown in FIG. 20, this embodiment of this application further provides a defect inspection apparatus 2000. The apparatus 2000 includes: an image acquiring module 2001 and a defect determining module 2002, where

the image acquiring module 2001 is configured to, in response to an inspection instruction for a target material, control a camera device to acquire a two-dimensional image and a three-dimensional image of the target material; the camera device being a structured light camera device integrating a two-dimensional image acquisition function and a three-dimensional image acquisition function; and
the defect determining module 2002 is configured to determine a defect inspection result of the target material based on the two-dimensional image and the three-dimensional image of the target material.

In one embodiment, the image acquiring module 2001 includes:

a first image acquiring unit, configured to control the camera device to acquire a two-dimensional image and a three-dimensional image of a product under inspection at a current inspection workstation; and
a second image acquiring unit, configured to control the camera device to move to a next inspection workstation to acquire a two-dimensional image and a three-dimensional image of a product under inspection at the next inspection workstation after the acquisition of the two-dimensional image and the three-dimensional image of the product under inspection at the current inspection workstation is completed, to acquire two-dimensional images and three-dimensional images of all products under inspection.

In one embodiment, the first image acquiring unit includes:

a two-dimensional image acquiring sub-unit, configured to control the camera device to acquire a two-dimensional image of a product under inspection at a current inspection workstation under the condition that a two-dimensional light supplementation device is turned on, and send a movement instruction to an upper-level computer after the acquisition of the two-dimensional image is completed, the movement instruction being used to instruct the upper-level computer to move the two-dimensional light supplementation device to the next inspection workstation; and
a three-dimensional image acquiring sub-unit, configured to control the camera device to acquire a three-dimensional image of the product under inspection at the current inspection workstation under the condition that a three-dimensional light supplementation device is turned on.

In one embodiment, the inspection instruction for the target material is sent by the upper-level computer after detecting that the target material has entered the inspection workstation and controlling a press-fitting apparatus to perform a downward pressing operation on the target material; where a coverage area of the press-fitting apparatus is greater than or equal to a top surface area of the target material.

In one embodiment, the camera device is a 3D structured light camera.

In one embodiment, the defect determining module 1602 includes:

an aligning unit, configured to perform spatial alignment processing on a two-dimensional image and a three-dimensional image;
an inspecting unit, configured to process the two-dimensional image and the three-dimensional image that are spatially aligned through a preset deep learning algorithm to obtain a defect inspection result of the target material.

In one embodiment, the inspecting unit includes:

an inspection region obtaining sub-unit, configured to obtain a first inspection region in the two-dimensional image and a second inspection region in the three-dimensional image;

an inspecting sub-unit, configured to check the inspection result of the first defect based on the first inspection region and check the inspection result of the second defect based on the second inspection region.

In one embodiment, the inspection region obtaining sub-unit includes:

a converting sub-unit, configured to preprocess the three-dimensional image to obtain point cloud data of the target material; and
an inspection region determining sub-unit, configured to determine a second inspection region based on the point cloud data.

In one embodiment, the inspecting sub-unit includes:

a feature obtaining sub-unit, configured to obtain planar features of the first inspection region; and
a first inspection result determining sub-unit, configured to determine an inspection result of a first defect based on the planar features.

In one embodiment, the inspecting sub-unit includes:

a distance obtaining sub-unit, configured to obtain a distance between a weld bead height of the target material and a top cover reference surface of the material in the second inspection region; and
a second inspection result determining sub-unit, configured to determine an inspection result of a second defect based on the distance.

In one of the embodiments, the apparatus 2000 further includes:
a sending module, configured to send the defect inspection result of the target material to the upper-level computer; and/or display the defect inspection result of the target material on a front-end interface.

For specific limitations on the defect inspection apparatus, reference may be made to the limitations on the steps in the defect inspection method in the previous description, and details are not repeated herein. Various modules in the foregoing defect inspection apparatus may be implemented, in whole or in part, by software, hardware, and combination thereof. The foregoing modules may be embedded in or independent of a target device in the form of hardware, or may be stored in a memory in the target device in the form of software, so that the target device can invoke and execute operations corresponding to the above modules.

In an embodiment, a computer device is provided. As shown in FIG. 21, the computer device includes a processor, a memory, a communication interface, a display screen, and an input apparatus that are connected via a system bus. The processor of the computer device is configured to provide computing and control capabilities. The memory of the computer device includes a non-volatile storage medium and an internal memory. The non-volatile storage medium has an operating system and a computer program stored thereon. The internal memory provides an environment for execution of the operating system and the computer program in the non-volatile storage medium. The communication interface of the computer device is used for wired or wireless communication with an external terminal, and the wireless communication may be implemented through WIFI, a mobile cellular network, NFC (Near Field Communication), or other technologies. The computer program is executed by the processor to implement a defect inspection method. The display screen of the computer device can be a liquid crystal display or an electronic ink display. The input apparatus of the computer device can be a touch layer covering the display screen, buttons, a trackball, or a touchpad provided on the outer shell of the computer device, or an external keyboard, touchpad, or mouse.

Those skilled in the art can understand that the structure shown in FIG. 21 is only a block diagram of a partial structure relevant to the solutions of this application and does not constitute a limitation on the computer device to which the solutions of this application is applied, and a specific computer device may include more or less components than those shown in the figure, or combine some components, or have a different arrangement of components.

In one embodiment, a computer device is further provided, including a memory and a processor, where a computer program is stored in the memory, and when the processor executes the computer program, the steps in the foregoing method embodiments are implemented.

The steps implemented by the processor in this embodiment are similar in principle and technical effects to the defect inspection method described above, and details are not repeated herein.

In one embodiment, a computer-readable storage medium is provided with a computer program stored thereon, where when the computer program is executed by a processor, the steps of the foregoing method embodiments are implemented.

The steps implemented by the computer program when executed by the processor in this embodiment are similar in principle and technical effects to the defect inspection method described above, and details are not repeated herein.

In one embodiment, a computer program product is provided, including a computer program, where when the computer program is executed by a processor, the steps of the foregoing method embodiments are implemented.

The steps implemented by the computer program when executed by the processor in this embodiment are similar in principle and technical effects to the defect inspection method described above, and details are not repeated herein.

Those skilled in the art can understand that all or some processes in the foregoing method embodiments may be implemented by a computer program instructing related hardware. The computer program may be stored in a non-volatile computer-readable storage medium. When the computer program is executed, the processes of the foregoing method embodiments may be implemented. Any reference to a memory, database, or another medium used in the embodiments provided in this application may include at least one of non-volatile and volatile memories. The non-volatile memory may include a read-only memory (Read-Only Memory, ROM), a magnetic tape, a floppy disk, a flash memory, an optical memory, a high-density embedded non-volatile memory, a resistive random access memory (ReRAM), a magnetoresistive random access memory (Magnetoresistive Random Access Memory, MRAM), a ferroelectric random access memory (Ferroelectric Random Access Memory, FRAM), a phase change memory (Phase Change Memory, PCM), a graphene memory, or the like. The volatile memory may include a random access memory (Random Access Memory, RAM) or an external cache. As an illustration and not a limitation, the RAM may be in various forms, such as a static random access memory (Static Random Access Memory, SRAM) or a dynamic random access memory (Dynamic Random Access Memory, DRAM). The database involved in the various embodiments provided in this application may include at least one of a relational database and a non-relational database. The non-relational database may include a blockchain-based distributed database or the like, but is not limited thereto. The processors involved in the various embodiments provided in this application may be general-purpose processors, central processing units, graphics processors, digital signal processors, programmable logic devices, data processing logic devices based on quantum computing, and are not limited thereto.

Technical features in the foregoing embodiments may be combined in any way. For brevity of description, not all possible combinations of the technical features in the foregoing embodiments are described. However, the combinations of these technical features shall be considered as falling within the scope recorded by this specification provided that no conflict exists.

The foregoing embodiments only represent several implementations of this application, and descriptions thereof are specific and detailed, but should not be construed as a limitation on the scope of this application patent. It should be noted that those of ordinary skill in the art can further make several modifications and improvements without departing from the concept of this application, and these modifications and improvements also fall within the protection scope of this application. Therefore, the protection scope of this application should be subject to the appended claims.

**Claims**

1. A defect inspection method, wherein the method comprises:

   in response to an inspection instruction for a target material, controlling a camera device to acquire a two-dimensional image and a three-dimensional image of the target material; the camera device being a structured light camera device integrating a two-dimensional image acquisition function and a three-dimensional image acquisition function; and
   determining a defect inspection result of the target material based on the two-dimensional image and the three-dimensional image of the target material.

2. The method according to claim 1, wherein the target material comprises a plurality of products under inspection, and each of the products under inspection is at a different inspection workstation; and the controlling a camera device to acquire a two-dimensional image and a three-dimensional image of the target material comprises:

   controlling the camera device to acquire a two-dimensional image and a three-dimensional image of a product under inspection at a current inspection workstation; and
   controlling the camera device to move to a next inspection workstation to acquire a two-dimensional image and a three-dimensional image of a product under inspection at the next inspection workstation after the acquisition of the two-dimensional image and the three-dimensional image of the product under inspection at the current inspection workstation is completed, to acquire two-dimensional images and three-dimensional images of all products under inspection.

3. The method according to claim 2, wherein the controlling the camera device to acquire a two-dimensional image and a three-dimensional image of a product under inspection at a current inspection workstation comprises:

   controlling the camera device to acquire a two-dimensional image of the product under inspection at the current inspection workstation under the condition that a two-dimensional light supplementation device is turned on, and send a movement instruction to an upper-level computer after the acquisition of the two-dimensional image is completed, the movement instruction being used to instruct the upper-level computer to move the two-dimensional light supplementation device to the next inspection workstation; and

controlling the camera device to acquire a three-dimensional image of a product under inspection at the current inspection workstation under the condition that a three-dimensional light supplementation device is turned on.

4. The method according to any one of claims 1 to 3, wherein the inspection instruction for the target material is sent by the upper-level computer after detecting that the target material has entered an inspection workstation and controlling a press-fitting apparatus to perform a downward pressing operation on the target material; wherein a coverage area of the press-fitting apparatus is greater than or equal to a top surface area of the target material.

5. The method according to any one of claims 1 to 3, wherein the camera device is a 3D structured light camera.

6. The method according to any one of claims 1 to 3, wherein the determining a defect inspection result of the target material based on the two-dimensional image and the three-dimensional image of the target material comprises:

    performing spatial alignment processing on the two-dimensional image and the three-dimensional image; and
    processing the two-dimensional image and the three-dimensional image that are spatially aligned through a preset deep learning algorithm to obtain a defect inspection result of the target material.

7. The method according to claim 6, wherein the defect inspection result comprises an inspection result of a first defect and an inspection result of a second defect, the first defect being a defect without height information and the second defect being a defect with height information; and
    the processing the two-dimensional image and the three-dimensional image that are spatially aligned through a preset deep learning algorithm to obtain a defect inspection result of the target material comprises:

    obtaining a first inspection region in the two-dimensional image and a second inspection region in the three-dimensional image; and
    checking the inspection result of the first defect based on the first inspection region and checking the inspection result of the second defect based on the second inspection region.

8. The method according to claim 7, wherein the obtaining a second inspection region in the three-dimensional image comprises:

    preprocessing the three-dimensional image to obtain point cloud data of the target material; and
    determining the second inspection region based on the point cloud data.

9. The method according to claim 7, wherein the checking the inspection result of first defect based on the first inspection region comprises:

    obtaining planar features of the first inspection region; and
    determining the inspection result of the first defect based on the planar features.

10. The method according to claim 7, wherein the checking the inspection result of second defect based on the second inspection region comprises:

    obtaining a distance between a weld bead height of the target material and a top cover reference surface of the material in the second inspection region; and
    determining the inspection result of the second defect based on the distance.

11. The method according to any one of claims 1 to 3, wherein the method further comprises:

    sending the defect inspection result of the target material to the upper-level computer; and/or
    displaying the defect inspection result of the target material on a front-end interface.

12. A defect inspection system, wherein the system comprises: a support frame, a camera device arranged on the support frame, a control device communicatively connected to the camera device, an upper-level computer communicatively connected to the control device, and inspection workstations arranged below the support frame; the camera device being a structured light camera device integrating a two-dimensional image acquisition function and a three-dimensional image acquisition function; wherein

    the inspection workstation is configured to carry the target material to be inspected;
    the upper-level computer is configured to send an inspection instruction for the target material to the control device; and
    the control device is configured to control the camera device to acquire a two-dimensional image and a three-dimensional image of the target material, and determine a defect inspection result of the target material based on the two-dimensional image and the three-dimensional image of the target material.

13. The system according to claim 12, wherein the system further comprises a lifting apparatus; the lifting apparatus is arranged on the support frame, with the camera device mounted on the lifting apparatus; and a plurality of inspection workstations are comprised below the support frame; and

the control device is configured to control the lifting apparatus to move the camera device to a position at each inspection workstation to acquire a two-dimensional image and a three-dimensional image of a product under inspection in each inspection workstation.

14. The system according to claim 13, wherein the system further comprises a sliding assembly and a two-dimensional light supplementation device, the sliding assembly being arranged on the support frame and located below the lifting apparatus and the two-dimensional light supplementation device being arranged on the sliding assembly; and

the control device is configured to control the camera device to acquire a two-dimensional image of a product under inspection in each inspection workstation under the condition that the two-dimensional light supplementation device is turned on, and send a movement instruction to the upper-level computer after the acquisition of the two-dimensional image of the product under inspection in each inspection workstation is completed, the movement instruction being used to instruct the upper-level computer to move the two-dimensional light supplementation device to a next inspection workstation through the sliding assembly.

15. The system according to claim 14, wherein the system further comprises a three-dimensional light supplementation device, the three-dimensional light supplementation device being arranged at a preset distance above each inspection workstation; and

the control device is configured to control the camera device to acquire a three-dimensional image of a product under inspection at a corresponding inspection workstation under the condition that the three-dimensional light supplementation device is turned on.

16. The system according to claim 15, wherein the system further comprises a press-fitting apparatus, the press-fitting apparatus being communicatively connected to the upper-level computer; and

the upper-level computer is further configured to control the press-fitting apparatus to perform a downward pressing operation on the target material after detecting that the target material has entered the inspection workstation and then send the inspection instruction to the control device; wherein a coverage area of the press-fitting apparatus is greater than or equal to a top surface area of the target material.

17. The system according to claim 16, wherein the press-fitting apparatus is provided with a cavity structure at each position corresponding to an inspection workstation, and the three-dimensional light supplementation device is an annular lighting device arranged around inner side of the cavity; wherein

the cavity structure is configured to align the camera device with a product under inspection in each inspection workstation.

18. A defect inspection apparatus, wherein the apparatus comprises:

an image acquiring module, configured to, in response to an inspection instruction for a target material, control a camera device to acquire a two-dimensional image and a three-dimensional image of the target material; the camera device being a structured light camera device integrating a two-dimensional image acquisition function and a three-dimensional image acquisition function; and

a defect determining module, configured to determine a defect inspection result of the target material based on the two-dimensional image and the three-dimensional image of the target material.

19. A computer device comprising a memory and a processor, wherein a computer program is stored in the memory, and the processor executes the computer program to implement the steps of the method according to any one of claims 1 to 11.

20. A computer-readable storage medium storing a computer program thereon, wherein when the computer program is executed by a processor, the steps of the method according to any one of claims 1 to 11 are implemented.

21. A computer program product comprising a computer program, wherein when the computer program is executed by a processor, the steps of the method according to any one of claims 1 to 11 are implemented.

100

102

Control device

103

101

Upper-level
computer

104

105

106

FIG. 1

（a）

（b）

（c）

FIG. 2

FIG. 3

FIG. 4

FIG. 5

FIG. 6

FIG. 7

FIG. 8

In response to an inspection instruction for a target material, control a camera device to acquire a two-dimensional image and a three-dimensional image of the target material; the camera device being a structured light camera device integrating a two-dimensional image acquisition function and a three-dimensional image acquisition function

~S901

Determine a defect inspection result of the target material based on the two-dimensional image and the three-dimensional image of the target material

~S902

FIG. 9

Control a camera device to acquire a two-dimensional image and a three-dimensional image of a product under inspection at a current inspection workstation

~S1001

Control the camera device to move to a next inspection workstation to acquire a two-dimensional image and a three-dimensional image of a product under inspection at the next inspection workstation after the acquisition of the two-dimensional image and the three-dimensional image of the product under inspection at the current inspection workstation is completed, to acquire two-dimensional images and three-dimensional images of all products under inspection

~S1002

FIG. 10

Control a camera device to acquire a two-dimensional image of a product under inspection at a current inspection workstation under the condition that a two-dimensional light supplementation device is enabled, and send a movement instruction to an upper-level computer after the acquisition of the two-dimensional image is completed, the movement instruction being used to instruct the upper-level computer to move the two-dimensional light supplementation device to the next inspection workstation $\sim$ S1101

Control the camera device to acquire a three-dimensional image of the product under inspection at the current inspection workstation under the condition that a three-dimensional light supplementation device is enabled $\sim$ S1102

FIG. 11

Perform spatial alignment processing on a two-dimensional image and a three-dimensional image $\sim$ S1201

Process the two-dimensional image and the three-dimensional image that are spatially aligned through a preset deep learning algorithm to obtain a defect inspection result of a target material $\sim$ S1202

FIG. 12

Obtain a first inspection region in a two-dimensional image and a second inspection region in a three-dimensional image $\sim$ S1301

Check an inspection result of a first defect based on the first inspection region $\sim$ S1302

Check an inspection result of a second defect based on the second inspection region $\sim$ S1303

FIG. 13

Preprocess a three-dimensional image to obtain point cloud data of a target material 〜S1401

Determine a second inspection region based on the point cloud data 〜S1402

FIG. 14

Obtain planar features of a first inspection region 〜S1501

Determine an inspection result of a first defect based on the planar features 〜S1502

FIG. 15

Obtain a distance between a weld bead height of a target material and a top cover reference surface of the material in a second inspection region 〜S1601

Determine an inspection result of a second defect based on the distance 〜S1602

FIG. 16

PC controls the two-dimensional light source to light, and two-dimensional image acquisition is performed at the third inspection workstation → PC controls a three-dimensional light source to light, and three-dimensional image acquisition is performed at the third inspection workstation

PLC controls the sensing head to move to the third inspection workstation

PLC controls the two-dimensional light source to move to a fourth inspection workstation

Product in place

Camera ready

PLC and PC products in place

PLC controls a cover plate to press down

PC controls a three-dimensional light source to light, and three-dimensional image acquisition is performed at the second inspection workstation

PC controls the two-dimensional light source to light, and two-dimensional image acquisition is performed at the fourth inspection workstation

PLC controls the two-dimensional light source to move to a third inspection workstation

PLC controls the two-dimensional light source to move to the first inspection workstation

PC controls the two-dimensional light source to light, and two-dimensional image acquisition is performed at the second inspection workstation

PC controls a three-dimensional light source to light, and three-dimensional image acquisition is performed at the fourth inspection workstation

The cover plate is lifted, and PC simultaneously makes logical judgments through algorithms

PLC controls a sensing head to move to a second inspection workstation

PC controls a two-dimensional light source to light, and two-dimensional image acquisition is performed at a first inspection workstation → PC controls a three-dimensional light source to light, and three-dimensional image acquisition is performed at the first inspection workstation

PLC controls the two-dimensional light source to move to a next inspection workstation

When the image acquisition is completed, PLC controls the sensing head to move to the first inspection workstation

Product release

FIG. 17

FIG. 18

An upper-level computer controls battery cells to move to inspection workstations with a fixture. After the battery cells move to their initial positions in the inspection workstations, the upper-level computer controls a cover plate to press down    S1901

A PLC sends signals that the battery cells reach the inspection workstations to a control device. The control device controls a two-dimensional light source and a three-dimensional light source to turn on    S1902

The control device controls a 3D structured light camera to take a picture in two-dimension mode at a first inspection workstation    S1903

The 3D structured light camera sends a two-dimensional image acquisition complete signal to the control device. After receiving the two-dimensional image acquisition complete signal, the control device sends a control instruction to the two-dimensional light source to move the two-dimensional light source to a next inspection workstation    S1904

The control device controls the 3D structured light camera to acquire an image in three-dimension mode. After the image acquisition in the three-dimension mode is completed, the 3D structured light camera sends a three-dimensional image acquisition complete signal to the control device, and the control device controls the 3D structured light camera to move to a next inspection workstation    S1905

Based on the manner of acquiring two-dimensional image and the three-dimensional image of the battery cell at the first inspection workstation, a two-dimensional image and a three-dimensional image are acquired for the next inspection workstation, until the image acquisition of all battery cells is completed. The two-dimensional light source, the three-dimensional light sources, and the 3D structured light camera return to their original positions    S1906

The 3D structured light camera sends the two-dimensional images and the three-dimensional images that are acquired to the control device. The control device invokes the AI algorithm to perform defect inspection on the two-dimensional images and the three-dimensional images to obtain inspection results    S1907

FIG. 19

2000

Defect inspection apparatus

Image acquiring module 2001

Defect determining module 2002

FIG. 20

Operating system

Computer program

Database

Non-volatile storage medium

Processor

Internal memory

System bus

I/O interface

Communication interface

Computer device

FIG. 21

## INTERNATIONAL SEARCH REPORT

| International application No. |
| --- |
| **PCT/CN2023/112228** |

| A. | CLASSIFICATION OF SUBJECT MATTER |
| --- | --- |

G06T7/00(2017.01)i

According to International Patent Classification (IPC) or to both national classification and IPC

| B. | FIELDS SEARCHED |
| --- | --- |

Minimum documentation searched (classification system followed by classification symbols)

IPC: G06T7/-

Documentation searched other than minimum documentation to the extent that such documents are included in the fields searched

Electronic data base consulted during the international search (name of data base and, where practicable, search terms used)

CNABS; CNTXT; CNKI; TWABS; DWPI; VEN; USTXT; WOTXT; EPTXT; IEEE; 百度, BAIDU: 缺陷, 检测, 识别, 二维, 三维, 立体, 平面, 图像, 图片, 点云, 相机, 摄像头, 传感器, 光栅, 条纹, 结构光, 纹理, defect, detection, recognition, two-dimension, 2D, three-dimension, 3D, stereoscopic, plane, image, picture, point cloud, camera, sensor, raster, optical grating, stripe, structure light, texture

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115809983 A (NINGDE CONTEMPORARY AMPEREX TECHNOLOGY CO., LTD.) 17 March 2023 (2023-03-17) claims 1-21 | 1-21 |
| X | JP 2008292430 A (PANASONIC ELEC WORKS CO., LTD.) 04 December 2008 (2008-12-04) description, paragraphs 20-95, and figures 1-12 | 1-5, 11-21 |
| X | CN 113252685 A (BOZHON PRECISION INDUSTRY TECHNOLOGY CO., LTD.) 13 August 2021 (2021-08-13) description, paragraphs 36-52, and figures 1-2 | 1-5, 11-21 |
| X | CN 113830377 A (NANJING DASHU INTELLIGENT SCIENCE AND TECHNOLOGY CO., LTD.) 24 December 2021 (2021-12-24) description, paragraphs 15-18, and figure 1 | 1-5, 11-21 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 October 2023** | **15 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/112228** |

**C.     DOCUMENTS CONSIDERED TO BE RELEVANT**

| Category* | Citation of document, with indication, where appropriate, of the relevant passages | Relevant to claim No. |
| --- | --- | --- |
| Y | JP 2008292430 A (PANASONIC ELEC WORKS CO., LTD.) 04 December 2008 (2008-12-04)<br>    description, paragraphs 20-95, and figures 1-12 | 6-11, 19-21 |
| Y | CN 113252685 A (BOZHON PRECISION INDUSTRY TECHNOLOGY CO., LTD.) 13 August 2021 (2021-08-13)<br>    description, paragraphs 36-52, and figures 1-2 | 6-11, 19-21 |
| Y | CN 113830377 A (NANJING DASHU INTELLIGENT SCIENCE AND TECHNOLOGY CO., LTD.) 24 December 2021 (2021-12-24)<br>    description, paragraphs 15-18, and figure 1 | 6-11, 19-21 |
| Y | CN 114359246 A (NANJING ZHONGYUTONG SCIENCE AND TECHNOLOGY CO., LTD.) 15 April 2022 (2022-04-15)<br>    description, paragraphs 69-136, and figures 1-10 | 6-11, 19-21 |
| A | CN 114494174 A (GUANGDONG UNIVERSITY OF TECHNOLOGY) 13 May 2022 (2022-05-13)<br>    entire document | 1-21 |
| A | CN 114397305 A (BEIHANG UNIVERSITY) 26 April 2022 (2022-04-26)<br>    entire document | 1-21 |

Form PCT/ISA/210 (second sheet) (July 2022)

**INTERNATIONAL SEARCH REPORT**
Information on patent family members

International application No.

**PCT/CN2023/112228**

| Patent document cited in search report | | | Publication date (day/month/year) | Patent family member(s) | | | Publication date (day/month/year) |
|---|---|---|---|---|---|---|---|
| CN | 115809983 | A | 17 March 2023 | None | | | |
| JP | 2008292430 | A | 04 December 2008 | JP | 4894628 | B2 | 14 March 2012 |
| CN | 113252685 | A | 13 August 2021 | None | | | |
| CN | 113830377 | A | 24 December 2021 | CN | 113830377 | B | 05 September 2023 |
| CN | 114359246 | A | 15 April 2022 | CN | 114359246 | B | 10 March 2023 |
| CN | 114494174 | A | 13 May 2022 | None | | | |
| CN | 114397305 | A | 26 April 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211037772